# EUROPEAN PATENT APPLICATION

(11) **EP 2 098 328 A2**
(43) Date of publication of application: **09.09.2009**
(21) Application number: 09002705.3
(22) Date of filing: 25.02.2009
(51) Int. Cl.: B23Q 1/28, B23Q 16/02

(54) **Workpiece support device and rotary indexer**

(30) Priority: 05.03.2008 JP 2008054210
(71) Applicant: TSUDAKOMA KOGYO KABUSHIKI KAISHA, Kanazawa-shi, Ishikawa-ken 921-8650 (JP)
(72) Inventor: Yonemitsu, Seiji, Kanazawa-shi Ishikawa-ken, 921-8650 (JP); Nishita, Yoichi, Kanazawa-shi Ishikawa-ken, 921-8650 (JP)
(74) Representative: Samson & Partner

(57) **Abstract**

A workpiece support device (70) includes a coupling member (3) that couples a second end of a workpiece (W); a support shaft (2), the coupling member (3) provided at a first end of the support shaft (2); a frame (1) that supports the support shaft (2) axially movably and rotatably; a force generating device (5) that applies a force in an axial direction to the support shaft (2); and an axial clamping device (6) including a single pressing member (6a1) extending along the entire periphery of the support shaft (2) or a plurality of pressing members (6a1) equally arranged in a circumferential direction of the support shaft (2), the pressing member (6a1) generating a force in a radial direction while the force generating device (5) is activated, the axial clamping device (6) fixing the support shaft (2) to the frame (1) in the axial direction by the force.

## Description

### BACKGROUND OF THE INVENTION

### 1. Field of the Invention

The present invention relates to a workpiece support device, the support device supporting a second end of the workpiece while a first end of the workpiece is coupled to a rotary shaft of a rotary drive. The present invention also relates to a rotary indexer including the workpiece support device, an indexing device serving as the rotary drive provided at a position opposite to the position of the support device, and a control device.

### 2. Description of the Related Art

The above-described rotary drive arranged at the position opposite to the position of the workpiece support device may be an indexing device mounted on a machine tool, or a spindle head of a machine tool such as a lathe. The indexing device provided at the position opposite to the position of the workpiece support device may be an indexing device mounted on a machine tool, or a spindle head of a machine tool such as a combined lathe having an indexing function.

The workpiece support device may be a tailstock arranged at a position opposite to the position of a lathe headstock that holds a first end surface of a workpiece. In a tailstock disclosed in Japanese Unexamined Patent Application Publication No. 10-6105, a frame supports a tailstock sleeve in which a tailstock shaft is rotatably supported at the central axis of the tailstock sleeve. To allow the tailstock sleeve to move in an axial direction, a play in the radial direction is provided between the frame and the tailstock sleeve. The tailstock sleeve is reciprocated by a hydraulic cylinder. A tailstock center coaxially provided at a tip of the tailstock shaft is pressed against a center bore at a second end surface of the workpiece. A play in the axial direction of a rotary shaft of the lathe headstock, the tailstock shaft, and the tailstock sleeve is eliminated by the pressed workpiece. In this state, a load exerted by a tool, that is, a machining force by the tool is applied, and hence the workpiece is machined.

As described above, although the play in the axial direction of the rotary shaft of the headstock, the tailstock shaft, and the tailstock sleeve is eliminated by the pressed workpiece, the play in a radial direction provided between the frame and the tailstock sleeve is not eliminated. Thus, the tailstock center supported by the tailstock sleeve via the tailstock shaft is movable in a radial direction relative to the frame. In addition, the tailstock center and a second end of the workpiece are restricted from relatively moving in the axial direction, but not sufficiently restricted from moving in the radial direction, by a pressing force applied by the tailstock center to the center bore. Since the second end of the workpiece is not sufficiently restricted from moving in the radial direction by the tailstock, when a part of the workpiece near the second end of the workpiece is to be machined, the workpiece may be moved in the radial direction and vibrated, bent, or twisted, by the machining force applied by the tool in a direction intersecting with a plane containing the axis of the tailstock shaft, for example, a direction orthogonal to the plane. The workpiece is machined while being vibrated or deformed. This may deteriorate machining accuracy. When turning is carried out, rotation deflection occurs. This may deteriorate surface roughness in addition to the machining accuracy.

### SUMMARY OF THE INVENTION

The present invention is made in light of the above situations. An object of the present invention is to improve machining accuracy of a workpiece while a first end of the workpiece is coupled to a rotary shaft of a rotary drive.

According to an aspect of the present invention, a workpiece support device is configured to support a second end of a workpiece while a first end of the workpiece is coupled to a rotary shaft of a rotary drive. The support device includes a coupling member configured to couple the second end of the workpiece; a support shaft, the coupling member provided at a first end of the support shaft; a frame configured to support the support shaft movably in an axial direction and rotatably; a force generating device configured to apply a force in the axial direction to the support shaft; and an axial clamping device including a single pressing member extending along the entire periphery of the support shaft or a plurality of pressing members equally arranged in a circumferential direction of the support shaft, the pressing member generating a force in a radial direction while the force generating device is activated, the axial clamping device fixing the support shaft to the frame in the axial direction by the force.

With the above configuration, the second end of the workpiece is coupled to the support shaft via the coupling member while the first end of the workpiece is coupled to the rotary shaft of the rotary drive, and the axial clamping device is activated to fix the support shaft in the axial direction while the force generating device presses or draws the second end of the workpiece via the support shaft and the coupling member. Accordingly, a play in the axial direction between the support shaft and the rotary shaft is eliminated by the workpiece, that is, a reaction force from the workpiece. Also, while the force generating device is activated, the axial clamping device is activated and the force in the radial direction is equally applied to the periphery of the support shaft. Accordingly, a play in the radial direction of the support shaft is eliminated, and the support shaft is continuously coaxial with the rotary shaft. Thus, the rotary shaft, the workpiece, and the support shaft are integrated while the rotary shaft is continuously coaxial with the support shaft. Also, the workpiece is supported by the rotary shaft and the support shaft with the play eliminated in the axial direction and the radial direction. The workpiece is machined without being moved or vibrated by a load in the axial direction applied from a tool, i.e., a machining force in the axial direction. Also, the workpiece is machined while a coaxial state is maintained without being vibrated or deformed in the radial direction by a load in the radial direction applied from the tool, i.e., a machining force in the radial direction. Therefore, the workpiece can be machined with high accuracy.

The support shaft may be directly supported by the frame. However, to improve machining accuracy of the workpiece during rotational machining, the following configuration is preferable. In particular, the workpiece support device further includes a countershaft provided at the outside in the radial direction of the support shaft coaxially with the support shaft. The frame supports the support shaft movably in the axial direction and rotatably in association with the countershaft. One of pairs including a pair of the support shaft and the countershaft and a pair of the countershaft and the frame is configured to be relatively rotatable but not relatively movable in the axial direction via a rolling bearing. The pressing member of the axial clamping device is supported by an outer member in the radial direction of the other one of the pairs, the axial clamping device applying a pressing force as a force in the radial direction to the outer peripheral surface of an inner member in the radial direction of the other one of the pairs.

With the above configuration, the frame and the countershaft support the support shaft movably in the axial direction and rotatably in association with each other. Accordingly, the support shaft is rotatable even when the axial clamping device is activated and movement in the axial drection of the support shaft is resticted. The workpiece is rotatable while movement in the axial direction and movement in the radial direction at the second end of the workpiece are restricted. Accordingly, rotational machining of the workpiece (turning machining, indexing machining in correspondence with a phase angle of the workpiece during continous rotation) can be carried out with high accuracy.

In the above configuration, the support shaft does not have to be actively held not rotatably. However, to improve the machining accuracy of the workpiece when the rotation of the rotary drive is stopped, the following configuration is provided. In particular, the support device further includes a rotational clamping device configured to restrict relative rotation of the one of the pairs.

With the above configuration, by activating the rotational clamping device in addition to the axial clamping device, the movement in the axial direction and the rotation of the supoprt shaft are restricted. When machining is carried out while the rotation of the rotary drive is stopped, the workpiece is prevented from being rotated at the second end of the workpiece, i.e., from being twisted by a machining force in a direction intersecting with a plane containing the axis, for example, in a direction orthogonal to the plane containing the axis, which is a machining force applied at a position deviated from the axis in the direction intersecting with the plane. Accordingly, the workpiece is machined without being deformed, thereby improving the machining accuracy.

In the above configuration, the first end of the workpiece may be coupled to the rotary shaft of the rotary drive without an indexing function. However, the first end of the workpiece W may be coupled to a rotary shaft of an indexing device so that the workpiece support device forms a rotary indexer. In particular, a rotary indexer according to a second aspect of the present invention is provided which includes the workpiece support device of the first aspect; an indexing device serving as the rotary drive provided at a position opposite to the position of the support device and including the rotary shaft to which the first end of the workpiece is coupled; and a control device. The control device deactivates the rotational clamping device when the indexing device is rotated, and activates the rotational clamping device when the rotation of the indexing device is stopped.

With the above configuration, while the force generating device is activated, when the axial clamping device is activated, the play in the axial direction between the support shaft and the rotary shaft is eliminated. Also, the support shaft is restricted from moving in the axial direction relative to the frame while the play in the radial direction between the support shaft and the frame is eliminated while a coaxial state is maintained. In this state, the control device deactivates the rotational clamping device when the indexing device is rotated. Accordingly, correct rotational indexing and highly accurate turning machining of the workpiece can be carried out. Also, the control device activates the rotational clamping device when the rotation of the indexing device is stopped. Accordingly, the support shaft is restricted from moving in the axial direction and from rotating. The workpiece is machined without being moved and vibrated in the axial direction by a machining force and wihtout being rotated and twisted at the second end of the workpiece by the machining force. Hence, the workpiece is machined without being deformed, thereby improving the machining accuracy.

Alternatively, when an indexing device is provided as the rotary drive, in the support device, the pressing member of the axial clamping device is supported by the frame and applies a pressing force as the force in the radial direction to the outer peripheral surface of the support shaft, and the support device fixes the support shaft to the frame not movably in the axial direction and not rotatably relative to the frame by the pressing force, the following configuration is provided. In particular, a rotary indexer according to a third aspect of the invention is provided which includes the workpiece support device of the first aspect; an indexing device serving as the rotary drive provided at a position opposite to the position of the support device and including the rotary shaft to which the first end of the workpiece is coupled; and a control device. The pressing member of the axial clamping device is supported by the frame and applies a pressing force as the force in the radial direction to the outer peripheral surface of the support shaft, and the support device fixes the support shaft to the frame not movably in the axial direction and not rotatably relative to the frame by the pressing force. The control device deactivates the axial clamping device and activates the force generating device when the indexing device is rotated, and activates the axial clamping device while the force generating device is activated when the rotation of the indexing device is stopped.

The invention with the above configuration, since the control device deactivates the axial clamping device and activates the force generating device when the indexing device is rotated, the support shaft and the rotary shaft are rotated while the play in the axial direction is continuously eliminated. Accordingly, correct rotational indexing and highly accurate turning machining of the workpiece can be carried out. Also, since the control device activates the axial clamping device while the force generating device is activated when the rotation of the indexing device is stopped, movement in the axial direction, vibration, and rotation of the support shaft are restricted while the support shaft is coaxial with the frame. Thus, when the rotation of the indexing device is stopped, movemnet in the axial direction and vibration and rotation at the second end, i.e., twisting of the workpiece by a machining force are restricted. The workpiece is machined without being moved, vibrated, and deformed, thereby improving machining accuracy.

In the rotary indexer, only the indexing device that supports the first end of the workpiece may carry out indexing for the workpiece, and the support shaft of the support device may be rotated via the workpiece. However, to improve indexing accuracy of the workpiece, and to improve the machining accuracy of rotational machining of the workpiece (turning machining, indexing machining in correspondence with a phase angle of the workpiece during rotating the workpiece), the following configuration is preferable. In particular, the rotary indexer further includes a drive configured to cause the support shaft to be rotated in the same manner as the indexing device.

With the above configuration, since the drive is provided to cause the support shaft to be rotated in the same manner as the indexing device, both ends of the workpiece can be rotationally driven by the indexing device and the support device. The workpiece is rotated without being twisted. Accordingly, machining accuracy and indexing accuracy for indexing machining are improved. Also, machining accuracy for rotational machining is improved.

The drive may cause the support shaft to be rotated in the same manner as the indexing device via a transmission mechanism, while a driving motor of the indexing device serves as a common drive source. To simplify the device, the following configuration is preferable. In particualr, the drive includes a dedicated driving motor which is different from a driving motor of the indexing device. The drive includes a control device configured to drive the dedicated driving motor synchronously with the driving motor of the indexing device.

With the above configuration, the drive includes the dedicated driving motor which is different from the driving motor of the indexing device. The control device of the drive drives the dedicated driving motor synchronously with the driving motor of the indexing device. The drive does not include a transmission mechanism coupled to the driving motor of the indexing device. Accordingly, the drive can be simplified. Also, synchronization deviation between the support shaft and the rotary shaft due to the use of the above transmission mechanism does not occur. In particular, synchronization deviation between the support shaft and the rotary shaft does not occur, the deviation may be caused by a play or twisting of a transmission mechanism component such as a gear, a timing pulley, a timing belt, a coupling, and a shaft.

### BRIEF DESCRIPTION OF THE DRAWINGS

Fig. 1 illustrates overview of a workpiece support device according to an embodiment;
Fig. 2 illustrates a left half portion of the workpiece support device in Fig. 1;
Fig. 3 illustrates a right half portion of the workpiece support device in Fig. 1;
Fig. 4 illustrates overview of a workpiece support device according to a modification of the embodiment;
Fig. 5 illustrates a left half portion of the workpiece support device in Fig. 4;
Fig. 6 illustrates a right half portion of the workpiece support device in Fig. 4;
Fig. 7 schematically illustrates overview of a workpiece support device according to another modification of the embodiment;
Fig. 8 illustrates overview of a workpiece support device according to still another modification of the embodiment;
Fig. 9 illustrates a left half portion of the workpiece support device in Fig. 8;
Fig. 10 illustrates a right half portion of the workpiece support device in Fig. 9; and
Fig. 11 illustrates an indexing device of a rotary indexer.

### DESCRIPTION OF THE PREFERRED EMBODIMENTS

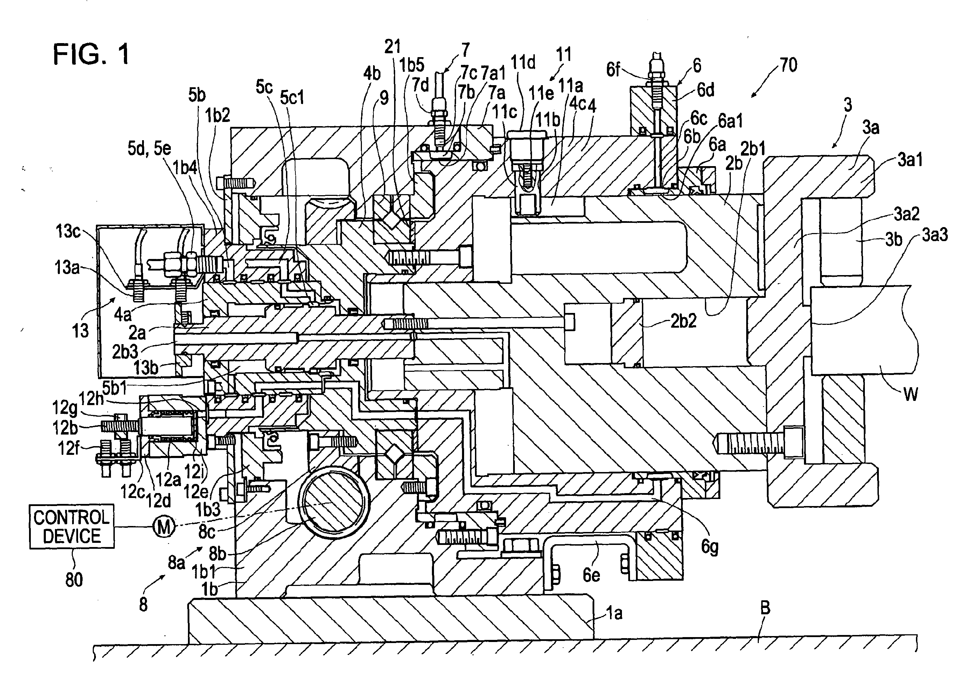

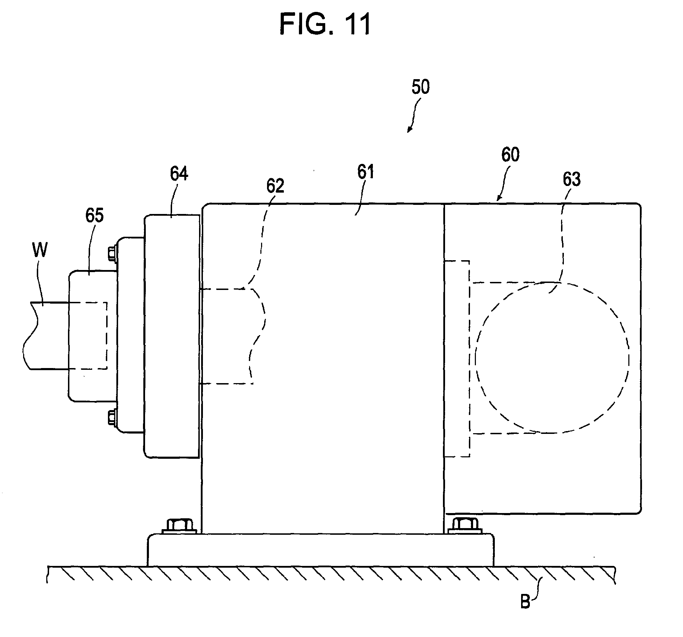

A rotary indexer 50 includes an indexing device 60 (Fig. 11) serving as a rotary drive, a workpiece support device 70 (Figs. 1, 4, 7, and 8) arranged at a position opposite to the position of the indexing device 60, and a control device 80 for both devices 60 and 70. The control device 80 controls the support device 70 in accordance with the operation of the indexing device 60. In the rotary indexer 50, for example, when a long workpiece W is to be machined, the indexing device 60 holds a first end of the workpiece W and the workpiece support device 70 holds a second end of the workpiece W.

In this embodiment, the indexing device 60 is mounted on a bed B of a machine tool. In particular, the machine tool includes a rotary shaft of a tool such as a grindstone, an end mill, a drill, a tap, etc., or a holder of a tool such as a cutting tool, and the tool is driven by, for example, numerical control. Alternatively, the indexing device 60 may serve as a workpiece supporting part, such as a headstock of a combined lathe having an indexing function, and define a machine tool with a tool driving part.

The indexing device 60 includes a body 61 mounted on and fixed to the bed B; a rotary shaft 62 rotatably supported in the body 61; a driving motor 63; a rotation transmission mechanism (not shown) provided in the body 61, having a worm speed reduction device or the like, and transmitting a torque of the driving motor 63 to the rotary shaft 62; a rotary table 64 provided at a first end of the rotary shaft 62, the rotary table 64 rotating for indexing; and a workpiece mounting jig 65 detachably attached to a workpiece mounting surface of the rotary table 64 by a bolt or the like, the workpiece mounting jig 65 fixing a first end of the workpiece W.

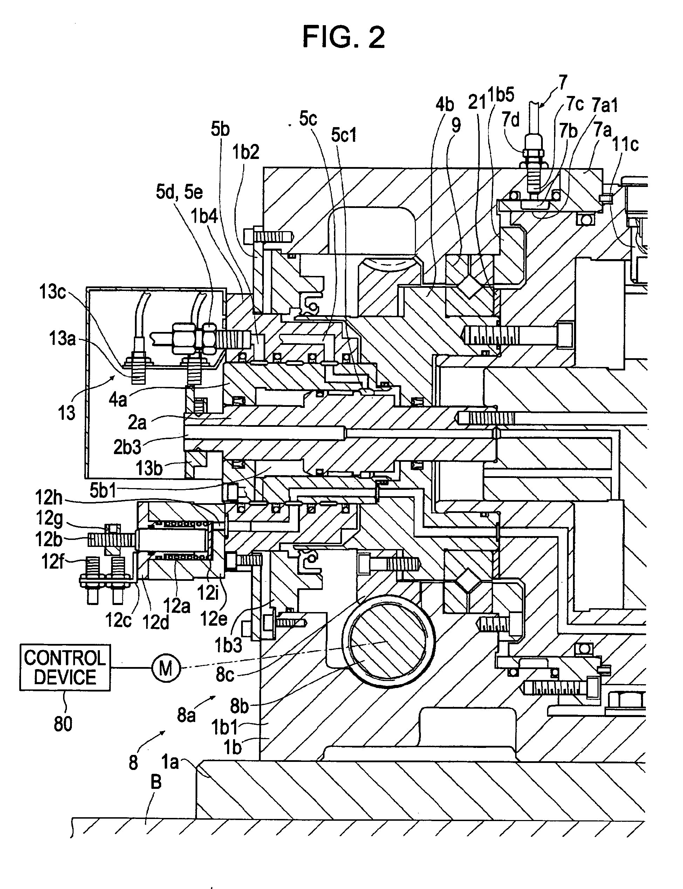

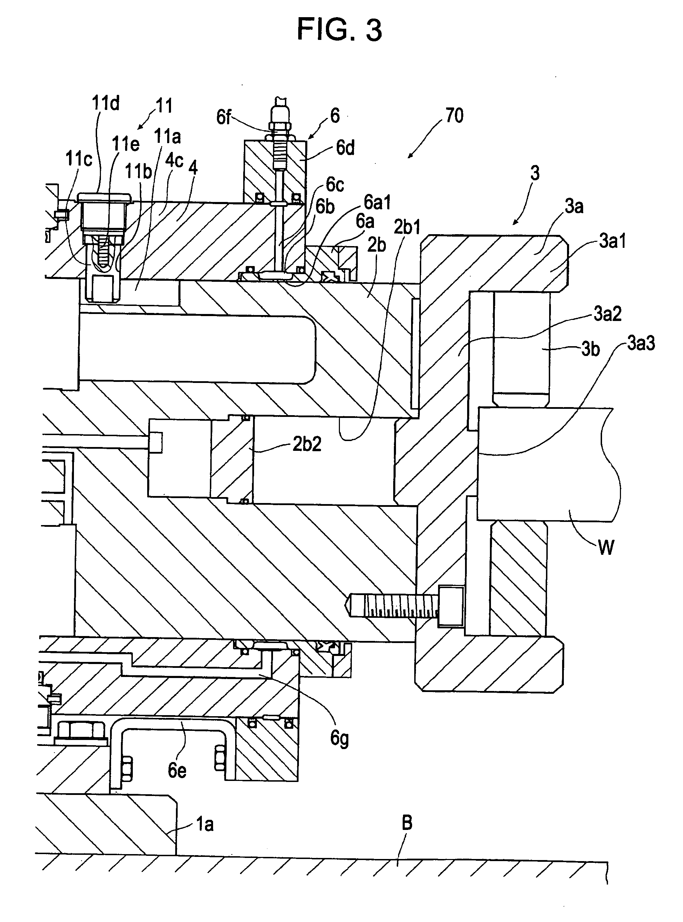

The workpiece support device 70 according to the embodiment, shown in Fig. 1 which is the overview of Fig. 1, Fig. 2 which is the detailed left view of Fig. 1, and Fig. 3 which is the detailed right view of Fig. 1, includes a frame 1 mounted on and fixed to the bed B; a countershaft 4 fitted to the inner peripheral surface of the frame 1; and a support shaft 2 fitted to the inner peripheral surface of the countershaft 4 and supported by the countershaft 4 movably in the axial direction and rotatably relative to the frame 1 via the countershaft 4. The frame 1, specifically, the inner peripheral surface of the frame 1, to which the countershaft 4 is fitted, is coaxial with the countershaft 4 and the support shaft 2. The workpiece support device 70 includes a coupling member 3 provided at a first end of the support shaft 2 so as to couple the second end of the workpiece W; a force generating device 5 that applies a force in the axial direction to the support shaft 2; an axial clamping device 6 that restricts the support shaft 2 from moving in the axial direction; a rotational clamping device 7 that restricts the support shaft 2 from rotating by restricting relative rotation of the frame 1 and the countershaft 4; and a drive 8 that rotates the support shaft 2.

The frame 1 includes a base plate 1a and a frame body 1b fixed to the base plate 1a by a bolt. The base plate 1a moves on the bed B in the axial direction of the support shaft 2 along a guide groove (not shown) having, for example, a dovetail-groove shape, and is fixed to the bed B via a clamping member (not shown). Accordingly, the position of the support device 70 opposite to the position of the indexing device 60 is adjusted in the axial direction depending on the length of the workpiece W.

The frame body 1b has a plurality of hollow first to fifth frame members 1b1 to 1b5 which are fastened by bolts to be integrated. The frame members 1b1 to 1b5, excluding a part of the frame member 1b1, define a cylindrical body. The frame body 1b serves as a housing space of the countershaft 4. The diameter of the outer peripheral surface of the countershaft 4 gradually increases in the axial direction toward the workpiece W. The diameter of the inner peripheral surface of the frame body 1b increases to correspond to the countershaft 4.

To be more specific, the frame body 1b includes the first frame member 1b1 fixed to the base plate 1a; the second frame member 1b2 having a disk-like shape and fixed to a not-workpiece-side end surface of the first frame member 1b1; the third frame member 1b3 fitted to a not-workpiece-side inner peripheral surface portion of the first frame member 1b1 and having a flange part which is pressed via a bolt and a washer and fixed to the first frame member 1b1; the fourth frame member 1b4 fitted to the inner peripheral surface of the third frame member 1b3 and fixed to the first frame member 1b1 via the second frame member 1b2; and the fifth frame member 1b5 serving as a fixing member to fix the outer ring of a cross roller bearing serving as a rolling bearing 9, the fifth frame member 1b5 fitted to a bearing-outer-ring fitting surface of the first frame member 1b1.

The countershaft 4, which is a hollow cylinder, is provided at the inside in the radial direction of the frame 1 coaxially with the inner peripheral surface of the frame 1 to which the countershaft 4 is fitted. The countershaft 4 houses the support shaft 2. The countershaft 4 has a plurality of first to third countershaft members 4a to 4c which are fixed by bolts to be integrated. By fitting the plurality of countershaft members 4a to 4c to each other, the countershaft members 4a to 4c having the coaxially formed peripheral surfaces, all peripheral surfaces of the countershaft members 4a to 4c are formed coaxially with the frame 1, in particular, with a countershaft fitting surface of the frame 1 and the support shaft 2.

To be more specific, the first to third countershaft members 4a to 4c of the countershaft 4 are arranged from the not-workpiece side toward the workpiece side in that order. The first countershaft member 4a is fitted to the inner peripheral surface of the fourth frame member 1b4. The third countershaft member 4c is fitted to a body member 7a of the rotational clamping device 7 (described later). The second countershaft member 4b is arranged between the first and third countershaft members 4a and 4c, and is fitted to the outer peripheral surfaces of the first and third countershaft members 4a and 4c. A worm wheel 8c and the inner ring of the rolling bearing 9 are fitted to the outer peripheral surface of the second countershaft member 4b.

The support shaft 2 is formed such that the diameter of the outer peripheral surface of the support shaft 2 gradually increases from the not-workpiece side toward the workpiece side. The support shaft 2 includes a first support shaft member 2a located at the not-workpiece side and a second support shaft member 2b located at the workpiece side. The peripheral surfaces of both members 2a and 2b are fitted to each other and integrated by a bolt. The outer peripheral surface of the support shaft 2 is fitted to the inner peripheral surface of the countershaft 4 with a clearance, i.e., a play, provided therebetween. An oil film of, for example, a lubricant or grease, is formed in the play, thereby allowing the support shaft 2 and the countershaft 4 to smoothly slide on each other. A center bore 2b1 is made at the central axis of a workpiece-side end surface of the second support shaft member 2b. The center bore 2b1 serves as a mounting reference hole for the coupling member 3 that couples the second end of the workpiece W. A block 2b2 is fitted to an intermediate part of the center bore 2b1 to serve as a lid, so as to prevent a foreign substance, such as cutting fluid, from entering the inside through an insertion hole of the bolt that fastens the support shaft members 2a and 2b.

The coupling member 3 detachably couples the workpiece W to the support shaft 2 by a bolt, or claws configured to be advanced and retracted in the radial direction. In this embodiment, a manual chucking device is used as the coupling member 3. The chucking device includes a base 3a and a plurality of claws 3b. The base 3a has a cylindrical shape with a bottom, to be open to the workpiece side. The plurality of claws 3b can be advanced in the radial direction from the inner peripheral surface of a cylindrical portion 3a1 of the base 3a by an advance/retract mechanism (not shown). A contact surface 3a3 that contacts the second end surface of the workpiece W protrudes at the central axis from a workpiece-side bottom surface of a bottom portion 3a2 of the base 3a. Also, a mounting reference shaft portion protrudes at the central axis from a not-workpiece-side bottom surface of the bottom portion 3a2 of the base 3a. When the shaft portion is fitted into the center bore 2b1, the chucking device is coaxially mounted to the support shaft 2. The plurality of claws 3b, for example, three claws 3b are equally arranged at, for example, three positions, on a circumference centering at the central axis of the support shaft 2. The claws 3b radially extend such that their tip ends are constantly equally arranged. To couple (or decouple) the workpiece W, a dedicated handle wrench is attached to operate the advance/retract mechanism (not shown), so that the tip ends of the plurality of claws 3b are positioned at equal distances from the central axis to hold (or release) the workpiece W. Accordingly, the workpiece W is coaxially coupled to (or decoupled from) the support shaft 2.

The axial clamping device 6 is provided at a workpiece-side end portion of the countershaft 4. The axial clamping device 6 includes a body member 6a having a flange part fixed to a workpiece-side end surface of the third countershaft member 4c by a bolt, a thin ring portion 6a1 formed at a cylindrical part of the body member 6a, a ring-shaped clamping pressure chamber 6b formed between the outer peripheral surface of the thin ring portion 6a1 and the inner peripheral surface of the third countershaft member 4c, a channel 6c penetrating through the third countershaft member 4c from the outer peripheral surface thereof in the radial direction and communicating with the clamping pressure chamber 6b, and a joint member 6d fitted to the outer peripheral surface of the third countershaft member 4c and fixed to the frame 1 via a bracket 6e. A rotary joint is defined to include the outer peripheral surface of the third countershaft member 4c and the inner peripheral surface of the joint member 6d. The channel 6c communicates with a high-pressure fluid supply (not shown) via the rotary joint, a connector terminal 6f provided at the outer peripheral surface of the joint member 6d, and a pipe.

When the axial clamping device 6 is activated, high-pressure air or high-pressure working oil, as high-pressure fluid, is supplied from the high-pressure fluid supply to the clamping pressure chamber 6b via the pipe, the connector terminal 6f, the rotary joint, and the channel 6c. The thin ring portion 6a1 functions as a pressing member provided at the countershaft 4. The diameter of the thin ring portion 6a1 decreases by the fluid pressure of the high-pressure fluid of the clamping pressure chamber 6b. The thin ring portion 6a1 presses the outer peripheral surface of the support shaft 2, and restricts relative movement of the countershaft 4 and the support shaft 2. The thin ring portion 6a1 thusly restricts relative movement in the axial direction of the countershaft 4 and the support shaft 2. In this embodiment, a single pressing member, that is, the thin ring portion 6a1 has a ring shape and extends along the entire periphery of the support shaft 2 so as to equally press the outer peripheral surface of the support shaft 2. Accordingly, the play in the radial direction between the countershaft 4 and the support shaft 2 is equally eliminated at the entire periphery while the relative movement in the axial direction of the countershaft 4 and the support shaft 2 is restricted, thereby achieving the coaxial arrangement of the countershaft 4 and the support shaft 2. Alternatively, a plurality of pressing members may be equally arranged in a circumferential direction of the support shaft 2. Similarly to the above, the play in the radial direction between the countershaft 4 and the support shaft 2 is equally eliminated at the entire periphery, thereby achieving the coaxial arrangement of the countershaft 4 and the support shaft 2.

In this embodiment, a detent device 11 is provided. The device 11 restricts relative rotation of the countershaft 4 and the support shaft 2 and permits relative movement in the axial direction of the countershaft 4 and the support shaft 2. The detent device 11 includes a retaining groove 11a extending in the outer peripheral surface of the support shaft 2 in the axial direction, and a pin serving as a retaining member 11c. The retaining member 11c is fitted into a through hole 11b penetrating through the countershaft 4 from the outer peripheral surface in the radial direction and reaching the retaining groove 11a. The retaining member 11c is also fitted into the retaining groove 11a. The fitting surfaces of the retaining member 11c and the retaining groove 11a are defined by two flat surfaces parallel to each other. The retaining groove 11a extends by a length which is greater than a permissible relative movement distance of the countershaft 4 and the support shaft 2. A cap 11d is screwed into the through hole 11b so as to prevent the retaining member 11c from being removed and to prevent a foreign substance such as cutting fluid from entering the inside. An internal thread 11e is provided at a head portion of the retaining member 11c. By screwing a bolt into the internal thread 11e and manually drawing a part of the bolt protruding from the outer peripheral surface of the countershaft 4, the retaining member 11c can be easily removed from the through hole 11b. Hence, the detent device 11 can be deactivated and workpiece machining can be carried out. The detent device 11 is deactivated, for example, in the following situation. A dedicated workpiece mounting jig is used as the coupling member 3 fixed to the support shaft 2 of the support device 70, instead of the chucking device of this embodiment. The permissible mounting phase of the workpiece W and the coupling member 3 is determined. Unless the relative phase of the second end of the workpiece W and the coupling member 3 is the permissible mounting phase, the second end of the workpiece W cannot be mounted to the coupling member 3 while the first end of the workpiece W is fixed to the indexing device 60. That is, the coupling member 3 is manually rotated with hand while the axial clamping device 6 is deactivated by removing the retaining member 11c and deactivating the detent device 11, so that the relative phase of the coupling member 3 and the second end of the workpiece W is adjusted to the mounting phase without rotating the countershaft 4 by the drive 8 (described later).

The rotational clamping device 7 is provided at a workpiece-side end portion of the frame 1. The rotational clamping device 7 includes a body member 7a having a flange part fixed to a workpiece-side end surface of the first frame member 1b1 by a bolt, a thin ring portion 7a1 formed at a cylindrical part of the body member 7a, a ring-shaped clamping pressure chamber 7b formed between the outer peripheral surface of the thin ring portion 7a1 and the inner peripheral surface of the first frame member 1b1, and a channel 7c penetrating through the first frame member 1b1 from the outer peripheral surface in the radial direction and communicating with the clamping pressure chamber 7b. The channel 7c communicates with a high-pressure fluid supply (not shown) via a connector terminal 7d provided at the outer peripheral surface of the first frame member 1b1, and a pipe.

When the rotational clamping device 7 is activated, high-pressure air or high-pressure working oil, as high-pressure fluid, is supplied from the high-pressure fluid supply to the clamping pressure chamber 7b via the pipe, the connector terminal 7d, and the channel 7c. The thin ring portion 7a1 functions as a pressing member provided at the frame 1. The diameter of the thin ring portion 7a1 decreases by the fluid pressure of the high-pressure fluid of the clamping pressure chamber 7b. The thin ring portion 7a1 presses the outer peripheral surface of the countershaft 4, and restricts relative movement of the frame 1 and the countershaft 4. The thin ring portion 7a1 thusly restricts rotation of the countershaft 4. Accordingly, rotation of the support shaft 2, whose rotation relative to the countershaft 4 is restricted by the detent device 11, is clamped. Also, since not only the relative movement in the axial direction of the countershaft 4 and the support shaft 2 is restricted but also the relative rotation of the countershaft 4 and the support shaft 2 is restricted, the rotation of the support shaft 2 can be clamped even when the retaining member 11c is removed and the detent device 11 is deactivated by activating the rotational clamping device 7 while the axial clamping device 6 is activated.

When the rotational clamping device 7 is deactivated, the pressure of the high-pressure fluid is reduced. The diameter of the inner peripheral surface of the thin ring portion 7a1 returns to the original diameter. Hence, the thin ring portion 7a1 stops pressing the outer peripheral surface of the support shaft 2, and the support shaft 2 becomes rotatable. In the rotational clamping device 7 in this embodiment, a single pressing member, that is, the thin ring portion 7a1 extends along the entire periphery of the support shaft 2 so as to equally press the outer peripheral surface of the support shaft 2 in a similar manner to the axial clamping device 6. However, the rotational clamping device 7 differs from the axial clamping device 6 in that the pressing member may have a structure in which a pressing member unequally presses the outer peripheral surface of the support shaft 2, or a structure in which a pressing member supported by one of the frame 1 and the support shaft 2 moves in the axial direction and presses an end surface of the other of the frame 1 and the support shaft 2 so as to clamp the rotation of the support shaft 2.

The outer ring of the rolling bearing 9 is fitted to the first frame member 1b1, and the inner ring thereof is fitted to the second countershaft member 4b of the countershaft 4. The outer ring is restricted from moving in the axial direction by a surface formed at a step portion of the first frame member 1b1 and being orthogonal to the axis of the first frame member 1b1, i.e., an orthogonal-to-axis step-portion surface of the first frame member 1b1, and by the fifth frame member 1b5. The inner ring is restricted from moving in the axial direction by an orthogonal-to-axis step-portion surface of the second countershaft member 4b, and by a spacer 21 which is arranged between the orthogonal-to-axis step-portion surface of the third countershaft member 4c and the inner ring and fitted to an inner ring fitting surface of the second countershaft member 4b. A roller serving as a rolling member permits relative rotation of the outer and inner rings but restricts relative movement in the axial direction of the outer and inner rings. Such structure may be applied to one of pairs including a pair of the support shaft 2 and the countershaft 4 and a pair of the countershaft 4 and the frame 1. In this embodiment, the countershaft 4 and the frame 1 are configured to be relatively rotatable but not relatively movable in the axial direction via the rolling bearing 9. The rolling bearing 9 in this embodiment is a single cross roller bearing which receives a radial load, a thrust load applied from the workpiece side, and a thrust load applied from the not-workpiece side, and causes the countershaft 4 and the frame 1 to be relatively rotatable but not relatively movable in the axial direction. Alternatively, the rolling bearing 9 may be formed of a plurality of rolling bearing members including, for example, a radial bearing or a plurality of radial bearings at an interval in the axial direction, a thrust bearing which receives the thrust load applied from the workpiece side, and a thrust bearing which receives the thrust load applied from the not-workpiece side.

The support shaft 2 is driven by the drive 8 synchronously with the rotary shaft 62 of the indexing device 60. The drive 8 includes a dedicated driving motor M (not shown) which is different from the driving motor 63 of the indexing device 60, a coupling (not shown), and a worm speed reduction mechanism 8a contained in the frame 1. The drive 8 rotationally drives the countershaft 4, thereby rotationally driving the support shaft 2 which is not rotatable relative to the countershaft 4. The worm speed reduction mechanism 8a includes a worm 8b supported by the frame 1 and coupled to the dedicated driving motor M via the coupling, and a worm wheel 8c fixed to the countershaft 4 and meshing with the worm 8b.

Since the workpiece support device 70 includes the force generating device 5 that applies the force in the axial direction to the support shaft 2, in this embodiment, the force generating device 5 also serves as a moving device of the support shaft 2 in the axial direction. The force generating device 5 includes a double-acting fluid-pressure cylinder device formed of the first countershaft member 4a of the countershaft 4 serving as a cylinder and the first support shaft member 2a of the support shaft 2 serving as a piston. An advance pressure chamber 5b1 is formed at the not-workpiece side and a retract pressure chamber 5c1 is formed at the workpiece side while a piston wall is arranged therebetween. To supply high-pressure fluid to the advance pressure chamber 5b1 and the retract pressure chamber 5c1 from the high-pressure fluid supply (not shown), a rotary joint is defined to include the inner peripheral surface of the fourth frame member 1b4 and the outer peripheral surface of the first countershaft member 4a. The advance pressure chamber 5b1 and the retract pressure chamber 5c1 are respectively communicate with connector terminals 5d and 5e provided at a not-workpiece-side end surface of the fourth frame member 1b4 via the rotary joint, and via an advance channel 5b and a retract channel 5c made in the fourth frame member 1b4 and the first countershaft member 4a. The advance pressure chamber 5b1 and the retract pressure chamber 5c1 are connected to the high-pressure fluid supply via a pipe, an electromagnetic on-off valve (not shown), and a regulator. When the support shaft 2 is advanced, and when a predetermined pressing force is applied via the coupling member 3 to the workpiece W the first end of which is coupled to the rotary shaft 62 of the indexing device 60, high-pressure fluid with a predetermined pressure is supplied from the high-pressure fluid supply to the advance pressure chamber 5b1. When the support shaft 2 is retracted, and when the workpiece W both ends of which are respectively coupled to the rotary shaft 62 of the indexing device 60 and the coupling member 3 is drawn by a predetermined drawing force, high-pressure fluid with a predetermined pressure is supplied from the high-pressure fluid supply to the retract pressure chamber 5c1.

An axial position sensor 13 of the support shaft 2 is provided at the not-workpiece side of the support device 70. The axial position sensor 13 detects advance by a distance exceeding a permissible limit and a retract limit of the support shaft 2 which is advanced and retracted by the force generating device 5. The axial position sensor 13 includes a pair of sensors 13a and a ring-shaped detection object 13b. The pair of sensors 13a is fixed to an axially long hole of a sensor holder 13c fixed to the frame 1 such that the positions in the axial direction of the sensors 13a are adjustable. The detection object 13b is fixed to the support shaft 2 by a setscrew. The workpiece-side sensor 13a is used for error detection such as a coupling error of the workpiece W, and an installation error of the support device 70. This sensor 13a detects the detection object 13b, for example, when the support shaft 2 is advanced by a predetermined distance or greater, in particular, when the first end of the workpiece W is not correctly coupled to the rotary shaft 62 of the indexing device 60 and hence the contact surface 3a3 of the coupling member 3 is advanced by a predetermined distance or greater, or when the support device 70 is arranged at a predetermined distance or greater from the indexing device 60 and then the contact surface 3a3 of the coupling member 3 is advanced by a predetermined distance or greater. This sensor 13a outputs an error detection signal to a control device of the machine tool via the control device 80. The control device of the machine tool outputs an operation inhibition signal in response to the error detection signal. The not-workpiece side sensor 13a detects the retract limit of the support shaft 2. When this sensor 13a detects the detection object 13b, the sensor 13a outputs a retract completion signal to the control device of the machine tool via the control device 80. The control device of the machine tool stops the supply of the high-pressure fluid from the high-pressure fluid supply in response to the retract completion signal. It is to be noted that the figure is provided for convenience of description, and therefore, the pair of sensors 13a is not illustrated at correct positions in the axial direction. Two ring-shaped spaces are formed by the outer peripheral surface of the support shaft 2 and the inner peripheral surface of the countershaft 4, and by two facing orthogonal-to-axis step-portion surfaces of the support shaft 2 and the countershaft 4, at a distance in the axial direction. The two ring-shaped spaces communicate with the outside air via an air vent 2b3 made in the support shaft 2 and being open to a not-workpiece-side end surface of the support shaft 2 so as to handle a change in volume thereof when the support shaft 2 is advanced and retracted.

The axial clamping device 6 in this embodiment includes an operation check device 12 to prevent the workpiece W from being machined while the axial clamping device 6 is deactivated. The operation check device 12 is formed to include a channel 6g being open to the not-workpiece-side end surface of the fourth frame member 1b4, made in the fourth frame member 1b4 and the countershaft 4, and communicating with the clamping pressure chamber 6b; the inner peripheral surface of the fourth frame member 1b4; and the outer peripheral surface of the countershaft 4. The operation check device 12 includes a rotary joint, at which the channel 6g of the fourth frame member 1b4 communicates with the channel 6g of the countershaft 4; a single-acting cylinder provided with a return spring 12a; a detection object 12g fixed at a ram 12b of the single-acting cylinder; and a pair of sensors 12f. When the axial clamping device 6 is activated, the operation check device 12 moves the ram 12b by using a fluid pressure actually added to the clamping pressure chamber 6b with the high-pressure fluid against an urging force of the return spring 12a. On the basis of the position of the ram 12b, the state whether the axial clamping device 6 is actually activated or deactivated can be recognized.

In particular, the single-acting cylinder includes a cylinder body 12e having a circulation hole 12h at a workpiece-side end surface thereof, the circulation hole 12h being connected to the channel 6g of the fourth frame member 1b4; a sleeve 12d provided at a not-workpiece-side end of the cylinder body 12e; the ram 12b fitted to the inner peripheral surface of the sleeve 12d; the return spring 12a surrounding the outer peripheral surface of the ram 12b; and a washer 12i fixed to a workpiece-side end surface of the ram 12b. The detection object 12g is inserted into the not-workpiece side of the ram 12b such that the position in the axial direction of the detection object 12g is adjusted. The detection object 12g is fixed by a setscrew. A sensor holder 12c is fixed to a not-workpiece-side end surface of the sleeve 12d. The pair of sensors 12f is provided at the sensor holder 12c, at a distance in the axial direction of the ram 12b.

The figure illustrates the state in which the ram 12b is located at a workpiece-side limit position. The detection object 12g faces the workpiece-side sensor 12f. This sensor 12f outputs a deactivation recognition signal to the control device 80, and therefore, the control device 80 recognizes that no fluid pressure is applied to the clamping pressure chamber 6b. When the ram 12b is moved toward the not-workpiece side against the urging force of the return spring 12a and the detection object 12g faces the not-workpiece-side sensor 12f, this sensor 12f outputs an activation recognition signal. Accordingly, the control device 80 recognizes that the axial clamping device 6 is activated while a predetermined pressure is applied to the clamping pressure chamber 6b. When the control device 80 does not receive the activation recognition signal from the not-workpiece-side sensor 12f although the control device 80 has output an activation command signal of the axial clamping device 6, a hydraulic motor, a high-pressure fluid supply such as an air compressor, a regulator, or an electromagnetic on/off valve may be in a fail. Then, the control device 80 outputs the operation inhibition signal to the control device of the machine tool, thereby inhibiting the workpiece W from being machined.

While the rotational clamping device 7 does not have an operation check device in this embodiment, the rotational clamping device 7 may have an operation check device in a similar manner to the axial clamping device 6. In such a case, the control device 80 outputs the operation inhibition signal if the control device 80 does not receive the activation recognition signal from a sensor of the operation check device when an activation command of the rotational clamping device 7 is output, or if the control device 80 does not receive the deactivation recognition signal from the sensor of the operation check device when the deactivation command of the rotational clamping device 7 is output.

The machining procedure of machining the workpiece W using the rotary indexer 50 is described below. The indexing device 60 and the support device 70 are arranged on the bed B of the machine tool at positions opposite to each other. The support device 70 is moved on the bed B and fixed at a predetermined distance from the indexing device 60 depending on the length of the workpiece W, whereas the support device 70 is fixed such that the support shaft 2 is located coaxially with the rotary shaft 62 of the indexing device 60.

An operator fixes and couples the first end of the workpiece W to the workpiece mounting jig 65 of the rotary shaft 62 of the indexing device 60, and then operates an activation switch of the force generating device 5, the switch provided on an operation panel of the machine tool. The control device 80 opens a supply valve and closes an exhaust valve at an advance electromagnetic on/off valve, and closes a supply valve and opens an exhaust valve at a retract electromagnetic on/off valve, in response to an activation signal of the force generating device 5 from the control device of the machine tool. Accordingly, the high-pressure fluid is supplied from the high-pressure fluid supply to the advance pressure chamber 5b1 with a predetermined pressure, and exhausted from the retract pressure chamber 5c1. The support shaft 2 is advanced, and the contact surface 3a3 of the chucking device contacts the second end surface of the workpiece W, thereby pressing the end surface by a force corresponding to the predetermined pressure of the high-pressure fluid. Hence, the play in the axial direction between the rotary shaft 62 of the indexing device 60 and the support shaft 2 of the support device 70 is eliminated by the workpiece W, in particular, by a reaction force applied by the workpiece W. The operator attaches the handle wrench to the chucking device to operate the advance/retract mechanism (not shown), thereby moving the plurality of claws 3b in the radial direction and holding the outer peripheral surface of the workpiece W. Accordingly, the second end of the workpiece W is fixed and coupled to the support shaft 2 via the chucking device.

The operator operates a machining start switch provided on the operation panel of the machine tool. The control device 80 activates the axial clamping device 6 in response to a machining start signal input via the control device of the machine tool. The operator opens the supply valve of the electromagnetic on/off valve of the axial clamping device 6, so that the high-pressure fluid is supplied from the high-pressure fluid supply to the clamping pressure chamber 6b. Accordingly, the diameter of the thin ring portion 6a1 of the body member 6a decreases. The thin ring portion 6a1 equally presses the outer peripheral surface of the support shaft 2. The play in the radial direction between the countershaft 4 and the support shaft 2 is equally eliminated at the entire periphery. Hence, the countershaft 4 and the support shaft 2 are coaxially integrated. The support shaft 2 is continuously coaxial with the frame 1, in particular, with the inner peripheral surface of the frame 1 to which the countershaft 4 is fitted, via the countershaft 4 even after the axial clamping device 6 is operated.

Next, the control device of the machine tool outputs a predetermined index angle signal to the control device 80. The control device 80 synchronously rotates the driving motor 63 and the dedicated driving motor M in accordance with an index angle signal, and stops the driving motor 63 and the dedicated driving motor M at a predetermined rotation index angle. Accordingly, the rotary shaft 62 and the support shaft 2 which is not rotatable relative to the countershaft 4 are synchronously rotated. Thus, the workpiece W, the first and second ends of which are respectively supported by the rotary shaft 62 and the support shaft 2, can be prevented from being twisted and deformed during indexing even when the workpiece W has a large weight and a large rotational resistance, even when the workpiece W is cut before machining or during machining and has a low torsion strength, or even when the center of gravity of the workpiece W is deviated from the axis and the torque due to the gravity varies depending on the rotational angle. Both ends of the workpiece W are stopped at the predetermined workpiece index angle, and the workpiece W can be held by the rotary indexer 50 without being twisted and deformed.

The control device 80 activates a clamping device (not shown) of the indexing device 60 to clamp the rotary shaft 62 after the motors 63 and M are stopped. Also, the control device 80 opens the supply valve and closes the exhaust valve of the electromagnetic on/off valve of the rotational clamping device 7, so as to supply the high-pressure fluid from the high-pressure fluid supply to the clamping pressure chamber 7b. Accordingly, the rotational clamping device 7 is activated, and the relative rotation of the frame 1 and the countershaft 4 is restricted. Thus, the support shaft 2 becomes not movable relative to the frame 1 via the countershaft 4 while the support shaft 2 is coaxial with the frame 1. That is, the support shaft 2 is not rotatable and not movable in the axial direction relative to the frame 1 via the countershaft 4. The workpiece W, the second end of which is held by the support shaft 2 via the chucking device, is integrally fixed to the frame 1, i.e., the workpiece W is held by the support device 70 not relatively movably.

The workpiece W is machined by a tool of the machine tool while the first and second ends of the workpiece W are held by the indexing device 60 and the support device 70 not relatively movably. The workpiece W receives a machining force in a direction intersecting with the axial direction, such as a direction orthogonal to the axial direction. In particular, the workpiece W receives a machining force in a direction intersecting with a plane including the axis, such as a direction orthogonal to the plane including the axis. The machining force is applied in a direction toward the axis, in a direction intersecting with the plane at a position deviated from the axis, and in the axial direction. A torsion stress is applied to the workpiece W by the machining force in the direction intersecting with the plane at the position deviated from the axis. However, the first and second ends of the workpiece W are respectively supported by the indexing device 60 and the support device 70 not relatively movably and not relatively rotatably. Accordingly, the workpiece W can be machined without being twisted and deformed. Also, the above-mentioned machining force in the axial direction axially moves the workpiece W. However, the first and second ends of the workpiece W are respectively supported by the indexing device 60 and the support device 70 not relatively movably in the axial direction. Accordingly, the workpiece W can be machined without moving in the axial direction or vibrating. Therefore, the workpiece W is machined without being twisted and deformed, and without moving in the axial direction or vibrating. The workpiece W can be machined with high accuracy.

When the machining of the workpiece W at the predetermined workpiece index angle is completed, the control device of the machine tool outputs a next predetermined index angle signal to the control device 80 for machining at a next predetermined workpiece index angle. On the basis of the index angle signal, the control device 80 closes the supply valve of the electromagnetic on/off valve of the rotational clamping device 7 to stop the supply of the high-pressure fluid to the clamping pressure chamber 7b, and opens the exhaust valve to reduce the pressure of the high-pressure fluid of the clamping pressure chamber 7b, thereby deactivating the rotational clamping device 7 in addition to a clamping device of the indexing device 60. Next, the control device 80 synchronously rotates the driving motor 63 and the dedicated driving motor M, and stops the motors 63 and M at the next predetermined index angle. The control device 80 activates the clamping device of the indexing device 60 and the rotational clamping device 7 after the motors 63 and M are stopped, so that the workpiece W is machined in a similar condition to that at the previous predetermined workpiece index angle.

When machining at all predetermined workpiece index angles is completed, in response to a machining end signal from the control device of the machine tool, the control device 80 deactivates the clamping device of the indexing device 60 and the rotational clamping device 7. Also, the control device 80 closes the supply valve of the electromagnetic on/off valve of the axial clamping device 6 to stop the supply of the high-pressure fluid to the clamping pressure chamber 6b and opens the exhaust valve to reduce the pressure of the high-pressure fluid of the clamping pressure chamber 6b, thereby deactivating the axial clamping device 6. Along with the reduction in pressure of the clamping pressure chamber 6b, the detection object 12g moves toward the workpiece side in the axial direction, and faces the workpiece-side sensor 12f. This sensor 12f outputs a deactivation recognition signal of the axial clamping device 6 to the control device of the machine tool via the control device 80. The control device of the machine tool causes a machining end lamp (not shown) to blink in response to the deactivation recognition signal.

The operator recognizes the end of machining by blinking of the machining end lamp, and then detaches the workpiece W. The operator attaches the handle wrench to the chucking device to operate the advance/retract mechanism, thereby retracting the claws 3b and releasing the workpiece W. Then, the operator operates a deactivation switch of the force generating device 5, the switch provided on the operation panel of the machine tool. The control device 80 closes the supply valve and opens the exhaust valve of the advance electromagnetic on/off valve of the force generating device 5, and opens the supply valve and closes the exhaust valve of the retract electromagnetic on/off valve, in response to a deactivation signal of the force generating device 5 from the control device of the machine tool. Accordingly, the high-pressure fluid is supplied from the high-pressure fluid supply to the retract pressure chamber 5c1, and exhausted from the advance pressure chamber 5b1, thereby retracting the support shaft 2. When the support shaft 2 is retracted, the contact surface 3a3 of the chucking device is separated from the second end surface of the workpiece W, and hence the second end of the workpiece W becomes detachable. The not-workpiece-side sensor 13a detects the detection object 13b when the support shaft 2 is retracted. Then, this sensor 13a outputs a retract completion signal to the control device of the machine tool via the control device 80. Accordingly, the supply of the high-pressure fluid from the high-pressure fluid supply is stopped. The operator detaches the workpiece W from the workpiece mounting jig 65 of the indexing device 60. Thusly, the machined workpiece W is detached from the rotary indexer 50.

In the rotary indexer 50, as described above, while the axial clamping device 6 clamps the support shaft 2, the control device 80 synchronously rotates the driving motor 63 of the indexing device 60 and the dedicated driving motor M of the support device 70. Accordingly, a correct workpiece index angle can be obtained. In addition, the workpiece W can be machined with high accuracy without being twisted and deformed during indexing and during machining at a predetermined workpiece index angle. Further, in this embodiment, the force generating device 5 is activated, and the play in the axial direction between the support shaft 2 and the rotary shaft 62 of the indexing device 60 is eliminated by the workpiece W. Accordingly, the workpiece W can be machined with further high accuracy without moving in the axial direction or vibrating due to the machining force from the tool.

In this embodiment, the force generating device 5 is activated from when the operator operates the activation switch of the force generating device 5 to when the operator operates the deactivation switch on the operation panel of the machine tool, and hence, the force generating device 5 is continuously activated during machining of the workpiece W. Alternatively, the force generating device 5 may be deactivated automatically or manually by operating the deactivation switch by the operator during machining after the axial clamping device 6 is activated. If an impulsive machining force is applied to the workpiece W in the axial direction and hence the support shaft 2 clamped by the axial clamping device 6 may be retracted, the force generating device 5 is preferably continuously activated during machining of the workpiece W by the tool in a similar manner to this embodiment. In particular, since the pressing force of the force generating device 5 in addition to the clamping force of the axial clamping device 6 acts against the impulsive machining force in the axial direction, the support shaft 2 can be prevented from being retracted, and machining accuracy can be maintained.

In this embodiment, the force generating device 5 employs the fluid-pressure cylinder device. Alternatively, the force generating device 5 may employ a structure other than the fluid-pressure cylinder device. For example, an intermediate member is provided which is coupled to the support shaft 2 relatively rotatably but not relatively movably in the axial direction. The intermediate member is moved in the axial direction by a torque motor via a motion converting device such as a ball screw device. Accordingly, the support shaft 2 is moved in the axial direction, and the support shaft 2 is pressed or drawn by a force corresponding to a predetermined torque of the torque motor via the workpiece W while the first end of the workpiece W is held by the indexing device 60.

In this embodiment, the contact surface 3a3 of the chucking device presses the second end surface of the workpiece W in the force generating device 5, and the rotary indexer 50 supports the workpiece W so as to compress the workpiece W in the axial direction. Accordingly, the play in the axial direction is eliminated by the workpiece W. Alternatively, the rotary indexer 50 may support the workpiece W in a stretched manner by drawing the workpiece W in the axial direction, thereby eliminating the play in the axial direction by the workpiece W, in particular, by a reaction force from the workpiece W. The workpiece W can be prevented from being deteriorated in straightness as a result of compression in the axial direction.

In such a case, after the second end of the workpiece W is fixed and coupled to the support shaft 2 by the chucking device, when the operator operates the machining start switch on the operation panel of the machine tool, the control device of the machine tool outputs a drawing signal of the force generating device 5 to the control device 80. In response to the drawing signal, the control device 80 closes the supply valve and opens the exhaust valve of the advance electromagnetic on/off valve, and opens the supply valve and closes the exhaust valve of the retract electromagnetic on/off valve. Accordingly, the high-pressure fluid is supplied from the high-pressure fluid supply to the retract pressure chamber 5c1 with a predetermined pressure, and exhausted from the advance pressure chamber 5b1. The workpiece W is drawn by the force generating device 5 by a predetermined force corresponding to the predetermined pressure of the high-pressure fluid. Thus, the rotary indexer 50 supports the workpiece W by drawing the workpiece W by the predetermined force in the axial direction in a stretched manner. Then, the control device of the machine tool outputs the activation signal of the axial clamping device 6 to the control device 80. The control device 80 activates the axial clamping device 6. Accordingly, similarly to the support in a compressed manner in the axial direction, the axial clamping device 6 is activated while the force generating device 5 is activated, and the support shaft 2 is coaxially fixed in the axial direction.

Similarly to the support in a compressed manner in the axial direction, the rotary indexer 50 machines the workpiece W while the play in the axial direction is eliminated by drawing the workpiece W in the axial direction by the predetermined drawing force and supporting the workpiece W in a stretched manner. The force generating device 5 may be deactivated after the axial clamping device 6 is activated in a similar manner to the above. However, if an impulsive machining force is applied to the workpiece W in the axial direction and hence the support shaft 2 clamped by the axial clamping device 6 may be advanced, the force generating device 5 is preferably continuously activated during machining of the workpiece W by the tool.

In this embodiment, the workpiece W is machined while the second end surface of the workpiece W is in contact with the contact surface 3a3 of the chucking device. Alternatively, the workpiece W may be held while the second end surface of the workpiece W is separated from the contact surface 3a3, and may be machined while a force in the axial direction is applied to the workpiece W by the force generating device 5. However, if an impulsive machining force may be applied to the workpiece W and hence the workpiece W may move relative to the chucking device, the workpiece W is preferably machined while the second end of the workpiece W is in contact with the contact surface 3a3 in a similar manner to this embodiment.

In this embodiment, in the chucking device serving as the coupling member 3, the claws 3b hold the outer peripheral surface of the workpiece W. Alternatively, for a workpiece W, such as a pipe, having the inner peripheral surface, the coupling member may be a chucking device in which claws 3b are advanced to the outside in the radial direction to hold the inner peripheral surface of the workpiece W. This may be applied when the outer peripheral surface of the workpiece W does not have a holding reference surface, or when a chucking mark has to be prevented from being left in the outer peripheral surface of the workpiece W. Also, in this embodiment, using the chucking device as the coupling member, the peripheral surface of the workpiece W is held via the claws 3b. Alternatively, the coupling member may be a workpiece mounting jig, which is detachably fixed to the support shaft 2 by a bolt or the like, such as the workpiece mounting jig 65 fixed to the rotary shaft 62 of the indexing device 60. The peripheral surface or the end surface of the second end of the workpiece W, the surface having a mounting reference, is fixed and coupled to the workpiece mounting jig by a bolt via a washer or the like.

The rotary indexer 50 can carry out, in addition to such indexing machining in which the rotation of the workpiece W is stopped and held at a predetermined index angle, indexing machining during rotating the workpiece W, and turning machining of the workpiece W, with or without indexing machining.

To carry out indexing machining during rotating the workpiece W, after the force generating device 5 is activated and then the axial clamping device 6 is activated, the control device of the machine tool synchronously rotates the driving motor 63 and the dedicated driving motor M via the control device 80 in a direction or two opposite directions at a predetermined rotational speed or a slow rotational speed, but the control device does not activate the rotational clamping device 7 or the clamping device of the indexing device 60. Accordingly, the rotary shaft 62 and the support shaft 2 are synchronously rotated, and the workpiece W, the first and second ends of which are respectively supported by the rotary shaft 62 and the support shaft 2, is machined without being twisted and deformed.

To carry out turning machining of the workpiece W, after the force generating device 5 is activated and then the axial clamping device 6 is activated, the control device of the machine tool synchronously rotates the driving motor 63 and the dedicated driving motor M via the control device 80, but does not activate the rotational clamping device 7 or the clamping device of the indexing device 60. Accordingly, the rotary shaft 62 and the support shaft 2 are synchronously rotated, and the workpiece W, the first and second ends of which are respectively supported by the rotary shaft 62 and the support shaft 2, is machined by turning without being twisted and deformed.

In this embodiment, the control device 80 is provided as the control device 80 of the rotary indexer 50. The indexing device 60 and the support device 70 which form the rotary indexer 50 are controlled in association with each other. In particular, the control device 80 controls the force generating device 5, the axial clamping device 6, and the rotational clamping device 7. In addition, the control device 80 serves as the control device of the drive of the indexing device 60 to control the driving motor 63, and serves as the control device of the drive 8 of the support device 70 to control the dedicated driving motor M. The control device 80 is connected to the control device of the machine tool. In response to a command signal from the control device of the machine tool, the control device 80 controls the rotary indexer 50 in association with the machine tool. Also, in response to a detection signal from the sensor, the control device 80 outputs an operation inhibition signal and the like to the control device of the machine tool. Alternatively, the rotary indexer 50 may include additional control devices, such as a control device of the indexing device 60, and a control device 80 of the support device 70. In such a case, the control device 80 of the support device 70 controls respective devices of the support device 70 in accordance with a control signal directly input from the control device of the indexing device 60 and a control signal input from the control device of the machine tool via the control device of the indexing device 60. Still alternatively, the control device 80 of the rotary indexer 50 may be contained in the control device of the machine tool, thereby reducing the space to be occupied by the control devices. The control device 80 controls the drive 8 of the support device 70 while controlling the rotation of the dedicated driving motor M. Alternatively, a dedicated control device of the drive 8 may be provided in addition to the control device 80. In such a case, the dedicated control device controls the rotation of the dedicated driving motor M in accordance with a control signal from the control device 80.

In this embodiment, the rotary indexer 50 is mounted on the bed B of the machine tool. Alternatively, a single or plurality of rotary indexers 50 may be provided on a member other than the bed B of the machine tool, for example, on a palette. In such a case, a single or plurality of palette standby positions may be provided. For example, a plurality of palette standby positions may be arranged with the machine tool interposed therebetween. The workpiece W may be mounted to the rotary indexer 50 at the standby position. The single or plurality of rotary indexers 50 is conveyed to a single or plurality of workpiece machining positions of the machine tool by a palette conveying device, and are machined one by one or simultaneously. After completion of machining, the single or plurality of rotary indexers 50 is conveyed to the original standby position or positions or to other standby position or positions by the palette conveying device. Then, the workpiece W is detached and another workpiece W is attached. The number of palettes may be one, however, if the plurality of palettes is used, waiting time of the machine tool for attachment/detachment of a workpiece is reduced or omitted although waiting time of the machine tool for conveyance of the palette is added. Accordingly, the waiting time of the machine tool can be reduced, and machining efficiency can be improved.

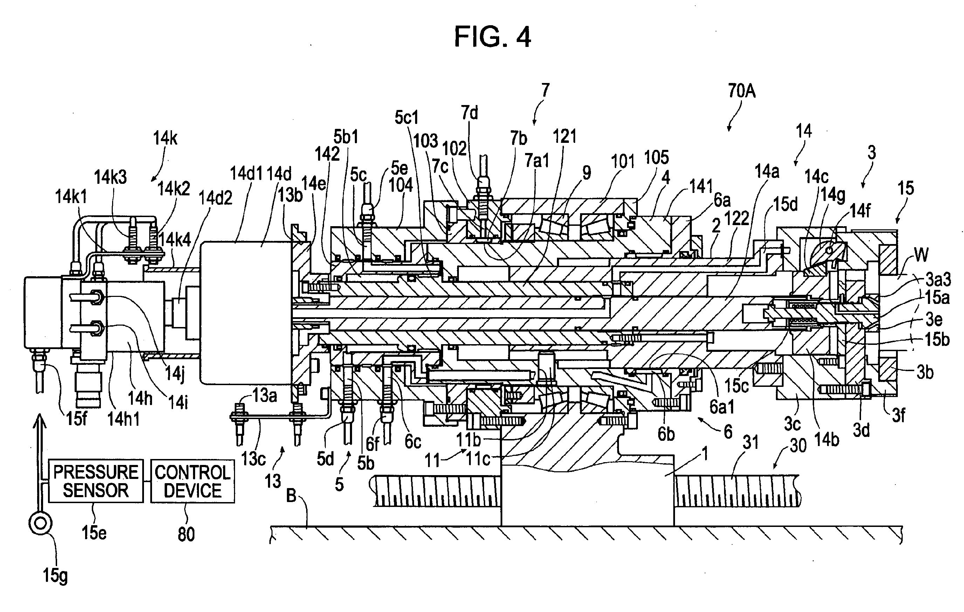

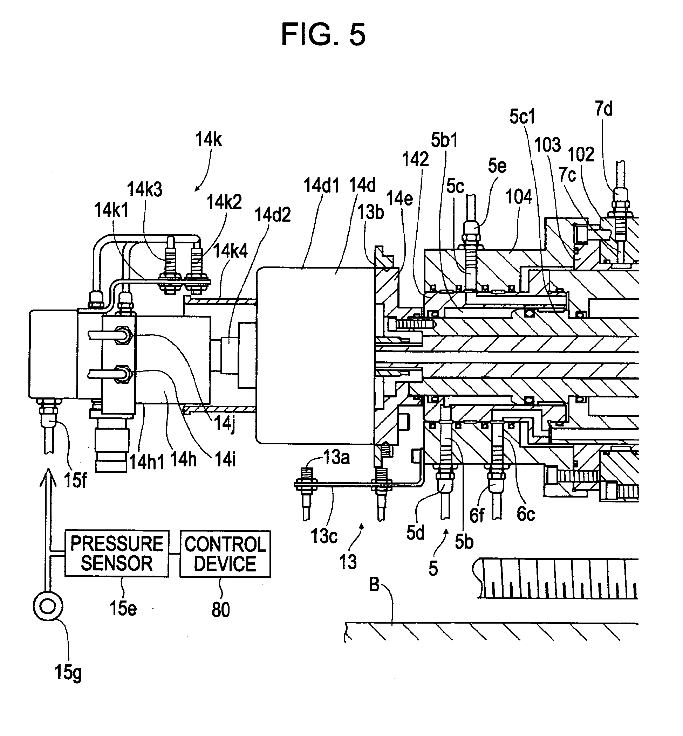

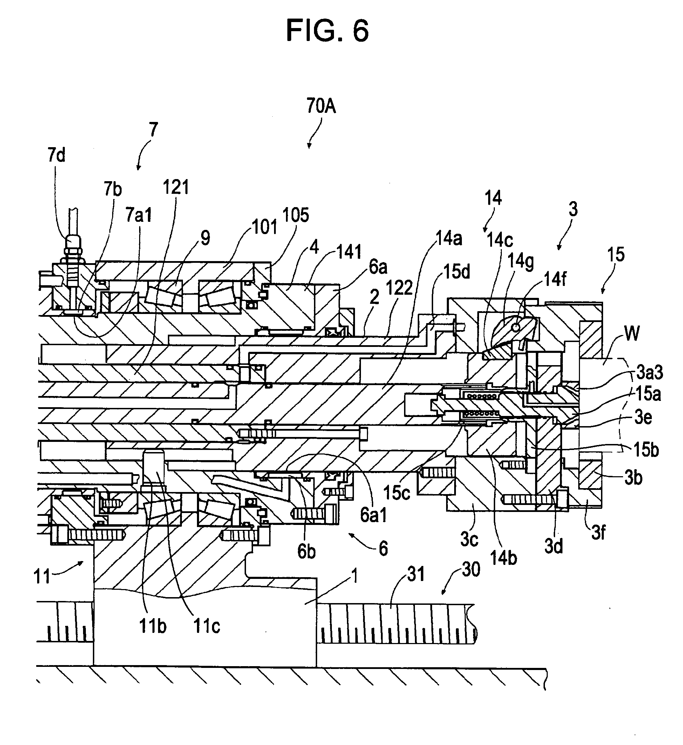

Next, a workpiece support device 70A according to a modification of the embodiment is described with reference to Fig. 4 which is the overview, Fig. 5 which is the detailed left view of Fig. 4, and Fig. 6 which is the detailed right view of Fig. 4. The workpiece support device 70A of this modification, similarly to the support device 70, is arranged at a position opposite to the position of an indexing device 60. The support device 70A and the indexing device 60 form a rotary indexer 50. The support device 70A of this modification differs from the support device 70 in that a support shaft 2 is rotationally driven by a driving motor 63 of the indexing device 60 via a workpiece W, that a chucking device serving as a coupling member 3 is a so-called power chuck and hence claws 3b are advanced and retracted in the radial direction by a fluid pressure, and that the position of the support device 70A opposite to the position of the indexing device 60 is adjusted by a feeder 30. In the support device 70A of this modification, like numerals refer like members with similar functions to those of respective members of the support device 70.

A frame 1 includes first to fifth frame members 101 to 105. The first frame member 101 is mounted on a bed B of a machine tool. The second frame member 102 is fitted to the inner peripheral surface of the first frame member 101 and fixed to a not-workpiece-side end surface of the first frame member 101 by a bolt. The third frame member 103 is fitted to the inner peripheral surface of the second frame member 102 and fixed to a not-workpiece-side end surface of the second frame member 102 by a bolt. The fourth frame member 104 is fitted to the outer peripheral surface of the third frame member 103 and fixed to a not-workpiece-side end surface of the third frame member 103 by a bolt. The fifth frame member 105 is fitted to the inner peripheral surface of the first frame member 101 and fixed to a workpiece-side end surface of the first frame member 101 by a bolt.

A countershaft 4 is provided by being fitted to the inner peripheral surface of the frame 1. The countershaft 4 includes a first countershaft member 141 fitted to the third and fifth frame members 103 and 105, and a second countershaft member 142 fitted to the inner peripheral surface of the first countershaft member 141, fixed to a not-workpiece-side end surface of the first countershaft member 141 by a bolt, and fitted to the fourth frame member 104.

The support shaft 2 is provided by being fitted to the inner peripheral surface of the countershaft 4. The support shaft 2 includes a first support shaft member 121 provided at the not-workpiece side, and a second support shaft member 122 fitted to the outer peripheral surface of the first support shaft member 121 and fixed to a workpiece-side end surface of the first support shaft member 121 by a bolt. The support shaft 2 has a through hole along the central axis thereof for a power chuck device.

A rolling bearing 9 is provided between the frame 1 and the countershaft 4. The rolling bearing 9 includes two tapered roller bearings. Both bearings are separated from each other in the axial direction by a positioning step portion provided at the inner peripheral surface of the first frame member 101. The outer ring of the not-workpiece-side tapered roller bearing and the outer ring of the workpiece-side tapered roller bearing are restricted from moving in the axial direction respectively toward the workpiece side and the not-workpiece side by the positioning step portion. The inner bearing of the workpiece-side tapered roller bearing is restricted from moving in the axial direction toward the workpiece side by an orthogonal-to-axis step-portion surface of the first countershaft member 141. The inner ring of the not-workpiece-side tapered roller bearing is restricted from moving in the axial direction toward the not-workpiece side by a pre-load nut screwed onto an external thread provided at the first countershaft member 141. A roller of the not-workpiece-side tapered roller bearing restricts the inner ring from moving in the axial direction toward the workpiece side via the outer ring. A roller of the workpiece-side tapered roller bearing restricts the inner ring from moving in the axial direction toward the not-workpiece side via the outer ring. Thus, in this modification, similarly to the support device 70, the countershaft 4 and the frame 1 are configured to be relatively rotatable but not relatively movable in the axial direction via the rolling bearing 9. An appropriate pre-load is applied in advance to the two tapered roller bearings by the pre-load nut. The play in the axial direction between the countershaft 4 and the frame 1 is eliminated while smooth relative rotation of the countershaft 4 and the frame 1 is provided. A locking nut to be screwed at a distance draws the pre-load nut in the axial direction via a countersunk screw. Using a frictional force generated between the screwed surfaces, the pre-load nut is prevented from being loosened.

A ball screw nut (not shown) is mounted to a bottom portion of the first frame member 101, the ball screw nut being a component of the feeder 30. Balls are embedded in the ball screw nut along a screw groove. Another component of the feeder 30 is a ball screw shaft 31 which extends in the axial direction of the support device 70A, in particular, in parallel to the axial direction of the inner peripheral surface of the frame 1. The ball screw shaft 31 is supported by a supporter (not shown) vertically arranged on the bed B of the machine tool, rotatably but not movably in the axial direction. The frame 1 moves on the bed B in the axial direction along a guide groove having a dovetail shape (not shown) provided at the bed B, by rotating the ball screw shaft 31 with a motor or a handle operated by the operator. The position of the support device 70A opposite to the position of the indexing device 60 is adjusted.

An axial clamping device 6 includes a body member 6a having a flange part fixed to a workpiece-side end surface of the first countershaft member 141 by a bolt; a thin ring portion 6a1 formed at a cylindrical part of the body member 6a; a ring-shaped clamping pressure chamber 6b formed between the outer peripheral surface of the thin ring portion 6a1 and the inner peripheral surface of the first countershaft member 141; and a channel 6c provided in the first and second countershaft members 141 and 142, both ends of the channel 6c being open to the clamping pressure chamber 6b and the outer peripheral surface of the second countershaft member 142. A rotary joint is defined to include the outer peripheral surface of the second countershaft member 142 and the fourth frame member 104. The channel 6c communicates with a high-pressure fluid supply (not shown) via the rotary joint, a connector terminal 6f provided at the outer peripheral surface of the second frame member 102, and a pipe.

When the axial clamping device 6 is activated, high-pressure air or high-pressure working oil, as high-pressure fluid, is supplied from the high-pressure fluid supply to the clamping pressure chamber 6b via the pipe, the connector terminal 6f, the rotary joint, and the channel 6c. The thin ring portion 6a1 functions as a pressing member provided at the countershaft 4. The diameter of the thin ring portion 6a1 decreases by the fluid pressure of the high-pressure fluid of the clamping pressure chamber 6b. The thin rig portion 6a1 presses the outer peripheral surface of the support shaft 2, and restricts relative movement of the countershaft 4 and the support shaft 2. The thin ring portion 6a1 thusly restricts relative movement of the countershaft 4 and the support shaft 2 in the axial direction.

In this modification, a detent device 11 is provided. The device 11 restricts relative rotation of the countershaft 4 and the support shaft 2 and permits relative movement in the axial direction of the countershaft 4 and the support shaft 2. The detent device 11 includes a retaining groove 11a extending in the outer peripheral surface of the support shaft 2 in the axial direction, and a pin serving as a retaining member 11c. The retaining member 11c is fitted into a through hole 11b penetrating through the countershaft 4 from the outer peripheral surface in the radial direction and reaching the retaining groove 11a. The retaining member 11c is also fitted into the retaining groove 11a. The fitting surfaces of the retaining member 11c and the retaining groove 11a are defined by two flat surfaces parallel to each other. The retaining groove 11a extends by a length which is greater than a permissible relative movement distance of the countershaft 4 and the support shaft 2.

A rotational clamping device 7 includes a thin ring portion 7a1 formed at the third frame member 103, a ring-shaped clamping pressure chamber 7b formed between the outer peripheral surface of the thin ring portion 7a1 and the inner peripheral surface of the second frame member 102, and a channel 7c penetrating through the second frame member 102 from the outer peripheral surface of the second frame member 102 in the radial direction and communicating with the clamping pressure chamber 7b. The channel 7c communicates with a high-pressure fluid supply (not shown) via a connector terminal 7d provided at the outer peripheral surface of the second frame member 102, and a pipe.

When the rotational clamping device 7 is activated, high-pressure air or high-pressure working oil, as high-pressure fluid, is supplied from the high-pressure fluid supply to the clamping pressure chamber 7b via the pipe, the connector terminal 7d, and the channel 7c. The thin ring portion 7a1 functions as a pressing member provided at the frame 1. The diameter of the thin ring portion 7a1 decreases by the fluid pressure of the high-pressure fluid of the clamping pressure chamber 7b. The thin ring portion 7a1 presses the outer peripheral surface of the countershaft 4, and restricts relative movement of the frame 1 and the countershaft 4. The thin ring portion 7a1 thusly restricts rotation of the countershaft 4. Accordingly, rotation of the support shaft 2, whose rotation relative to the countershaft 4 is restricted by the detent device 11, is clamped.

The force generating device 5 includes a double-acting fluid-pressure cylinder device formed of the second countershaft member 142 of the countershaft 4 serving as a cylinder and the first support shaft member 121 of the support shaft 2 serving as a piston. An advance pressure chamber 5b1 is formed at the not-workpiece side and a retract pressure chamber 5c1 is formed at the workpiece side while a piston wall is arranged therebetween. To supply high-pressure fluid to the advance pressure chamber 5b1 and the retract pressure chamber 5c1 from a high-pressure fluid supply (not shown), a rotary joint is defined to include the inner peripheral surface of the fourth frame member 104 and the outer peripheral surface of the second countershaft member 142. The advance pressure chamber 5b1 and the retract pressure chamber 5c1 respectively communicate with connector terminals 5d and 5e provided at the outer peripheral surface of the fourth frame member 104 via the rotary joint, and via an advance channel 5b and a retract channel 5c made in the fourth frame member 104 and the second countershaft member 142. The advance pressure chamber 5b1 and the retract pressure chamber 5c1 are connected to the high-pressure fluid supply via a pipe, an electromagnetic on-off valve (not shown), and a regulator.

The chucking device serving as the coupling member 3 includes a base 3c fitted to the outer peripheral surface of the second support shaft member 122 and fixed to a workpiece-side end surface of the second support shaft member 122 by a bolt, a claw guide member 3d fixed to a workpiece-side end surface of the base 3c by a bolt and having a plurality of radial guide grooves extending toward the central axis, a plurality of claw holding members 3f having protruding parts fitted to the radial guide grooves, a plurality of claws 3b respectively fixed to the inside of the claw holding members 3f in the radial direction, a contact surface member 3e fixed to a workpiece-side end surface of the claw guide member 3d and defining a contact surface 3a3 at a workpiece-side end surface of the contact surface member 3e, a claw advance/retract device 14 that moves the plurality of claws 3b in the radial direction via the claw holding members 3f, and a mount check device 15 that checks whether the workpiece W is in contact with the contact surface 3a3 or not.

The claw advance/retract device 14 includes a drawbar 14a fitted into the through hole at the central axis of the support shaft 2; a piece holder 14b screwed onto an external thread provided at the outer peripheral surface of a workpiece-side end portion of the drawbar 14a and fitted to the inner peripheral surface of the base 3c; a plurality of tilting pieces 14c fixed to the piece holder 14b; a plurality of engagement pieces 14g respectively housed in a plurality of radial grooves formed at the base 3c equally arranged on a circumference of the base 3c and extending in the axial direction, the engagement pieces 14g being respectively supported by pins 14f provided at the base 3c; a rotary fluid-pressure cylinder device 14d in which a casing 14d1 is fixed to a not-workpiece-side end portion of the first support shaft member 121 by a bolt via a cylinder holder 14e, and in which a piston rod 14d2 is screwed onto an external thread provided at the outer peripheral surface of a not-workpiece-side end portion of the drawbar 14a; and a rotary joint device 14h fitted to the outer peripheral surface of a not-workpiece-side end portion of the piston rod 14d2, the rotary joint device 14h being provided via a rotation restriction member (not shown) in a manner not rotatable but movable in the axial direction relative to the frame 1. The rotary joint device 14h has a casing 14h1 which includes a holding connector terminal 14i and a releasing connector terminal 14j respectively connected to an air supply 15g via pipes, electromagnetic on/off valves, and regulators.

The mount check device 15 includes a piece holder 15b fixed to a workpiece-side end surface of the base 3c by a bolt, a slide piece 15a fitted into an insertion hole of the piece holder 15b, a spring 15c for urging the slide piece 15a to cause the slide piece 15a to protrude from the contact surface 3a3 of the contact surface member 3e, and the rotary joint device 14h. A channel 15d for high-pressure air is formed at the piston rod 14d2, the support shaft 2, the piece holder 15b, and the slide piece 15a. The channel 15d is open to a fitting surface of the piston rod 14d2 with respect to the rotary joint device 14h and open to a workpiece-side end surface of the slide piece 15a. Accordingly, an air exhaust nozzle is formed in the workpiece-side end surface of the slide piece 15a. The high-pressure air from the air supply 15g is supplied to a connector terminal 15f provided at the casing 14h1 of the rotary joint device 14h via an electromagnetic on/off valve and a pipe to which a pressure sensor 15e is branch-connected. The high-pressure air is exhausted from the air exhaust nozzle of the slide piece 15a via the rotary joint device 14h and the channel 15d.

In the support device 70A of this modification, similarly to the support device 70, an axial position sensor 13 of the support shaft 2 is provided at the not-workpiece side of the support device 70A. The axial position sensor 13 detects advance by a distance exceeding a permissible limit and a retract limit of the support shaft 2 which is advanced and retracted by the force generating device 5. The axial position sensor 13 of this modification includes a pair of sensors 13a and a ring-shaped detection object 13b. The pair of sensors 13a is fixed to an axially long hole of a sensor holder 13c fixed to the frame 1 such that the positions in the axial direction of the sensors 13a are adjustable. The detection object 13b is fixed to the outer peripheral surface of the cylinder holder 14e and thusly fixed to the support shaft 2 via the cylinder holder 14e. The workpiece-side sensor 13a is used for error detection, such as a coupling error of the workpiece W and an installation error of the support device 70A. This sensor 13a detects the detection object 13b when the support shaft 2 is advanced by a predetermined distance or greater, and outputs an error detection signal to a control device of the machine tool via a control device 80. The control device of the machine tool outputs an operation inhibition signal in response to the error detection signal. The not-workpiece side sensor 13a detects the retract limit of the support shaft 2. When this sensor 13a detects the detection object 13b, the sensor 13a outputs a retract completion signal to the control device of the machine tool via the control device 80. The control device of the machine tool stops the supply of the high-pressure fluid from the high-pressure fluid supply in response to the retract completion signal. It is to be noted that the figure is provided for convenience of description, and therefore, the pair of sensors 13a is not illustrated at correct positions in the axial direction.

The machining procedure of machining the workpiece W using the rotary indexer 50 is described below. The operator operates a handle to rotate the ball screw shaft 31, to move the support device 70A along the guide groove at the bed B, and to adjust the position of the support device 70A opposite to the position of the indexing device 60 depending on the length of the workpiece W.

The operator fixes and couples the first end of the workpiece W to a workpiece mounting jig 65 of a rotary shaft 62 of the indexing device 60, and then operates an activation switch of the force generating device 5, the switch provided on an operation panel of the machine tool. The control device 80 opens a supply valve and closes an exhaust valve at an advance electromagnetic on/off valve, and closes a supply valve and opens an exhaust valve at a retract electromagnetic on/off valve, in response to an activation signal of the force generating device 5 from the control device of the machine tool. Accordingly, the high-pressure fluid is supplied from the high-pressure fluid supply to the advance pressure chamber 5b1 with a predetermined pressure, and exhausted from the retract pressure chamber 5c1. At this time, the control device 80 opens the electromagnetic on/off valve of the mount check device 15 to exhaust air from the air exhaust nozzle at the slide piece 15a. The support shaft 2 is advanced, and the contact surface 3a3 of the chucking device contacts the second end surface of the workpiece W, thereby pressing the end surface by a force corresponding to the predetermined pressure of the high-pressure fluid. Accordingly, the air exhausted from the air exhaust nozzle is interrupted, and the air pressure in the pipe increases. The air pressure is measured by a pressure sensor 15e. The control device 80 causes a mounting completion lamp (not shown) of the machine tool to blink if the input measured value of the pressure sensor 15e exceeds a threshold value. The play in the axial direction between the rotary shaft 62 of the indexing device 60 and the support shaft 2 of the support device 70A is eliminated by the workpiece W, in particular, by a reaction force applied by the workpiece W. Also, the play in the axial direction between the ball screw nut provided at the frame 1 and the ball screw shaft 31 is eliminated by a reaction force added from the workpiece W via the frame 1.

The operator operates an activation switch of the claw advance/retract device 14, the switch provided on the operation panel of the machine tool. The control device 80 opens a holding electromagnetic on/off valve and closes a releasing electromagnetic on/off valve, in response to the activation signal of the claw advance/retract device 14 from the control device of the machine tool. The high-pressure air is supplied to the rotary joint device 14h from the air supply 15g via the regulator, the electromagnetic on/off valve, the pipe, and the holding connector terminal 14i. The high-pressure air enters a channel (not shown) made in the piston rod 14d2 via the rotary joint device 14h, and is supplied to a drawbar retract pressure chamber (not shown) of the rotary fluid-pressure cylinder device 14d. The drawbar 14a coupled to the piston rod 14d2 moves through the through hole of the support shaft 2 toward the not-workpiece side. The plurality of tilting pieces 14c fixed to the piece holder 14b move toward the not-workpiece side. The engagement pieces 14g rotate by the movement of the tilting pieces 14c toward the not-workpiece side, to move the claw holding members 3f having engagement recesses to the inside in the radial direction. The plurality of claw holding members 3f are respectively guided by the plurality of radial guide grooves of the claw guide member 3d. The plurality of claws 3b holds the outer peripheral surface of the workpiece W with a pressing pressure corresponding to a predetermined air pressure. Accordingly, the second end of the workpiece W is fixed and coupled to the support shaft 2.

A drawbar displacement sensor 14k is provided at the claw advance/retract device 14. The drawbar displacement sensor 14k detects retract by a distance exceeding a retract limit and advance completion of the drawbar 14a. The drawbar displacement sensor 14k includes a pair of proximity sensors 14k2 and 14k3 mounted to the casing 14h1 of the rotary joint device 14h via a sensor holder 14k1 such that the positions in the axial direction of the proximity sensors 14k2 and 14k3 are adjustable, and a hollow cylinder 14k4 fixed to the casing 14h1 of the rotary joint device 14h. The hollow cylinder 14k4 is coaxially fixed to the piston rod 14d2. A ring-shaped detection object protruding to the outside in the radial direction is formed at the outer peripheral surface of a not-workpiece-side end portion of the hollow cylinder 14k4. The workpiece-side proximity sensor 14k2 outputs a holding failure signal to the control device 80 when this proximity sensor 14k2 detects retract by a distance exceeding the retract limit of the drawbar 14a. In particular, the proximity sensor 14k2 detects that the plurality of claws 3b is located at a movement limit position at the inside in the radial direction and hence the workpiece W may be held with a pressing force other than the predetermined pressing force. Thus, the claws 3b have to be adjusted or replaced. Then, the control device 80 outputs the operation inhibition signal to the control device of the machine tool. The not-workpiece side proximity sensor 14k3 detects advance completion of the drawbar 14a when the workpiece W is released after machining is completed (described below). This proximity sensor 14k3 outputs a claw-retraction completion signal to the control device 80. The control device 80 stops the supply of the high-pressure air to a drawbar advance pressure chamber (not shown) of the rotary fluid-pressure cylinder device 14d.

The operator operates a machining start switch provided on the operation panel of the machine tool. The control device 80 activates the axial clamping device 6 in response to a machining start signal input via the control device of the machine tool. The control device 80 opens the supply valve of the electromagnetic on/off valve of the axial clamping device 6, so that the high-pressure fluid is supplied from the high-pressure fluid supply to the clamping pressure chamber 6b.

Next, the control device of the machine tool outputs a predetermined index angle signal to the control device 80. The control device 80 stops the driving motor 63 at a predetermined rotation index angle in accordance with an index angle signal.

The control device 80 activates a clamping device (not shown) of the indexing device 60 to clamp the rotary shaft 62 after the driving motor 63 is stopped. Also, the control device 80 opens the supply valve and closes the exhaust valve of the electromagnetic on/off valve of the rotational clamping device 7, so as to supply the high-pressure fluid from the high-pressure fluid supply to the clamping pressure chamber 7b. Accordingly, the rotational clamping device 7 is activated, and the relative rotation of the frame 1 and the countershaft 4 is restricted. The workpiece W is integrally fixed to the frame 1. That is, the workpiece W is supported by the support device 70A not relatively movably.

The workpiece W is machined by a tool of the machine tool while the first and second ends of the workpiece W are held by the indexing device 60 and the support device 70A not relatively movably.

When machining of the workpiece W at the predetermined workpiece index angle is completed, the control device of the machine tool outputs a next predetermined index angle signal to the control device 80 for machining at a next predetermined workpiece index angle. The control device 80 deactivates the clamping device of the indexing device 60 and the rotational clamping device 7 in accordance with the index angle signal. Then, the control device 80 rotates the driving motor 63 and stops the driving motor 63 at a next predetermined index angle. The control device 80 activates the clamping device of the indexing device 60 and the rotational clamping device 7 after the driving motor 63 is stopped, so that the workpiece W is machined in a similar condition to that at the previous predetermined workpiece index angle.

When machining at all predetermined workpiece index angles is completed, in response to a machining end signal from the control device of the machine tool, the control device 80 deactivates the clamping device of the indexing device 60 and the rotational clamping device 7, and also deactivates the axial clamping device 6.

The operator operates a deactivation switch of the claw advance/retract device 14, the switch provided on the operation panel of the machine tool. The control device 80 closes the holding electromagnetic on/off valve and opens the releasing electromagnetic on/off valve, in response to the deactivation signal of the claw advance/retract device 14 from the control device of the machine tool. The high-pressure air is supplied from the releasing connector terminal 14j to the rotary joint device 14h. The high-pressure air enters a channel (not shown) made in the piston rod 14d2 via the rotary joint device 14h, and is supplied to the drawbar advance pressure chamber (not shown) of the rotary fluid-pressure cylinder device 14d. The drawbar 14a coupled to the piston rod 14d2 moves toward the workpiece side. The plurality of tilting pieces 14c fixed to the piece holder 14b move toward the workpiece side. The engagement pieces 14g rotate by the movement of the tilting pieces 14c toward the workpiece side, to move the claw holding members 3f to the outside in the radial direction. The plurality of claws 3b is retracted from the outer peripheral surface of the workpiece W to the outside in the radial direction, and hence the workpiece W is released.

The operator operates a deactivation switch of the force generating device 5, the switch provided on the operation panel of the machine tool. The high-pressure fluid is supplied from the high-pressure fluid supply to the retract pressure chamber 5c1, and exhausted from the advance pressure chamber 5b1, thereby retracting the support shaft 2. When the support shaft 2 is retracted, the contact surface 3a3 of the contact surface member 3e is separated from the second end surface of the workpiece W, and hence the second end of the workpiece W becomes detachable. The not-workpiece-side sensor 13a detects the detection object 13b when the support shaft 2 is retracted. Then, this sensor 13a outputs a retract completion signal to the control device of the machine tool via the control device 80. Accordingly, the supply of the high-pressure fluid from the high-pressure fluid supply is stopped. The operator detaches the workpiece W from the workpiece mounting jig 65 of the indexing device 60, and thusly the machined workpiece W is detached from the rotary indexer 50.

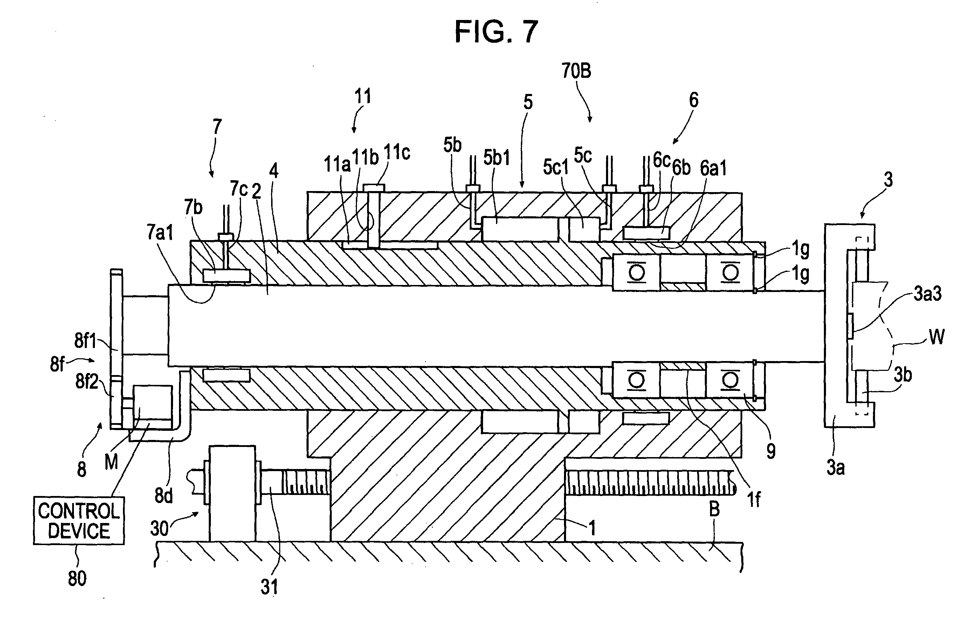

Next, a support device 70B according to another modification is schematically illustrated in Fig. 7. The workpiece support device 70B of this modification, similarly to the support device 70 or 70A, is arranged at a position opposite to the position of an indexing device 60. The support device 70B and the indexing device 60 form a rotary indexer 50. The support.device 70B differs from the support device 70 or 70A in that, while the countershaft 4 and the frame 1 are configured to be relatively rotatable but not relatively movable in the axial direction via the rolling bearing 9 in the support device 70 or 70A, a support shaft 2 and a countershaft 4 are configured to be relatively rotatable but not relatively movable in the axial direction via a rolling bearing 9 in this modification.

The position of the support device 70B opposite to the position of the indexing device 60 is adjusted depending on the length of a workpiece W by a feeder 30 in a similar manner to the support device 70A.

A force generating device 5 employs a fluid-pressure cylinder device formed of the frame 1 serving as a cylinder and the countershaft 4 serving as a piston. High-pressure fluid supplied from a high-pressure fluid supply (not shown) is supplied to an advance pressure chamber 5b1 located at the not-workpiece side and to a retract pressure chamber 5c1 located at the workpiece side via an advance channel 5b and a retract channel 5c formed at the frame 1. In this modification, the force generating device 5 employs the fluid-pressure cylinder device. Alternatively, the force generating device 5 may employ a structure other than the fluid-pressure cylinder device. For example, the countershaft 4 is moved in the axial direction by a torque motor via a motion converting device, such as a ball screw device, so that the support shaft 2 is pressed or drawn by a force corresponding to a predetermined torque of the torque motor.

An axial clamping device 6 is provided at the frame 1 as shown in a schematic illustration. In the axial clamping device 6, high-pressure fluid is supplied from a high-pressure fluid supply (not shown) to a ring-shaped clamping pressure chamber 6b formed at the frame 1 via a channel 6c formed at the frame 1. Accordingly, the diameter of a thin ring portion 6a1 decreases and the thin ring portion 6a1 holds the outer peripheral surface of the countershaft 4, thereby restricting relative movement of the frame 1 and the countershaft 4. The axial clamping device 6 thusly restricts the relative movement in the axial direction of the frame 1 and the countershaft 4.

A detent device 11 is provided between the frame 1 and the countershaft 4. A flanged pin serving as a retaining member 11c is inserted through a through hole 11b formed at the frame 1. The tip end of the flanged pin is fitted into a retaining groove 11a formed at the outer peripheral surface of the countershaft 4 and extending in the axial direction by a length of at least a relative movement limit of the frame 1 and the countershaft 4. Similarly to the support device 70, the retaining member 11c can be removed from the detent device 11 in this modification. The detent device 11 can be even deactivated depending on a situation.

Two bearings, which serve as the rolling bearing 9, are disposed between the inner peripheral surface of the countershaft 4 and the outer peripheral surface of the support shaft 2 at a distance from each other in the axial direction. The outer ring of the not-workpiece-side bearing is restricted from moving in the axial direction toward the not-workpiece side by an orthogonal-to-axis step-portion surface of the countershaft 4. The outer ring of the workpiece-side bearing is restricted from moving in the axial direction toward the workpiece side by a stop ring 1g fixed to the inner peripheral surface of the countershaft 4. The inner rings of the two bearings are restricted from moving in the axial direction toward the workpiece side and the not-workpiece side by an orthogonal-to-axis step-portion surface of the support shaft 2, a stop ring 1g fixed to the outer peripheral surface of the support shaft 2, and a distance collar 1f. The outer and inner rings of the bearings are restricted from moving in the axial direction by a rolling member. Accordingly, the support shaft 2 and the countershaft 4 are configured to be relatively rotatable but not relatively movable in the axial direction via the rolling bearing 9. It is noted that this modification is schematically illustrated, and the rolling bearing 9 employs a radial bearing. A rolling bearing 9, such as a cross roller bearing or a tapered roller bearing, may be used in an actual device, the rolling bearing 9 receiving a thrust load in addition to a radial load. While the stop rings 1g are used to restrict the movement of the outer and inner rings of the rolling bearing 9 in the axial direction, it is difficult to receive the thrust load with the stop rings 1g. Hence, in the actual device, an orthogonal-to-axis step-portion surface, a pre-load nut, etc., are used in a similar manner to the support device 70 or 70A.

A rotational clamping device 7 is provided at the countershaft 4 as shown in a schematic illustration. In the rotational clamping device 7, high-pressure fluid is supplied from a high-pressure fluid supply (not shown) to a ring-shaped clamping pressure chamber 7b formed at the countershaft 4 via a channel 7c formed at the countershaft 4. Accordingly, the diameter of a thin ring portion 7a1 decreases and the thin ring portion 7a1 holds the outer peripheral surface of the support shaft 2, thereby restricting relative movement of the countershaft 4 and the support shaft 2. The rotational clamping device 7 thusly restricts the relative rotation of the countershaft 4 and the support shaft 2. Accordingly, even when the retaining member 11c is removed and hence the detent device 11 is deactivated, the support shaft 2 is clamped in a manner not rotatable relative to the frame 1 via the countershaft 4 which is restricted from moving in the axial direction and rotating relative to the frame 1 by the activation of the axial clamping device 6.

A chucking device, which serves as a coupling member 3, is fixed to a workpiece-side end portion of the support shaft 2. The coupling member 3 includes a base 3a, a plurality of claws 3b, and a contact surface 3a3.

A drive 8 of the support shaft 2 is provided, which is schematically illustrated. The drive 8 includes a dedicated driving motor M mounted to the countershaft 4 via a bracket 8d, and a gear mechanism 8f. The gear mechanism 8f includes a gear 8f1 fixed to the support shaft 2 and a gear 8f2 fixed to a rotary shaft of the dedicated driving motor M.

The machining procedure of machining the workpiece W using the rotary indexer 50 is described below. The operator operates a handle to rotate the ball screw shaft 31. The support device 70B is moved along a guide groove at a bed B. The position of the support device 70B opposite to the position of the indexing device 60 is adjusted depending on the length of the workpiece W. The operator fixes and couples the first end of the workpiece W to a workpiece mounting jig 65 of a rotary shaft 62 of the indexing device 60, and then operates an activation switch of the force generating device 5, the switch provided on an operation panel of a machine tool. A control device 80 supplies high-pressure fluid to an advance pressure chamber 5b1 in response to an activation signal of the force generating device 5 from a control device of the machine tool. The support shaft 2 is advanced with the countershaft 4. The contact surface 3a3 presses the second end surface of the workpiece W by a force corresponding to a predetermined pressure of the high-pressure fluid. Hence, the play in the axial direction between the rotary shaft 62 of the indexing device 60 and the support shaft 2 of the support device 70B is eliminated by the workpiece W. Also, the play in the axial direction between the ball screw nut provided at the frame 1 and the ball screw shaft 31 is eliminated by a reaction force added from the workpiece W via the frame 1. The operator operates a claw advance/retract mechanism of the coupling member 3 so as to hold the outer peripheral surface of the workpiece W by a plurality of claws 3b. Then, the operator operates a machining start switch provided on the operation panel of the machine tool. The control device 80 activates the axial clamping device 6 in response to a machining start signal input via the control device of the machine tool. Next, the control device of the machine tool outputs a predetermined index angle signal to the control device 80. The control device 80 synchronously rotates the driving motor 63 and the dedicated driving motor M in accordance with an index angle signal, and stops the driving motor 63 and the dedicated driving motor M at a predetermined rotation index angle. The control device 80 activates a clamping device of the indexing device 60 and the rotational clamping device 7 after the motors 63 and M are stopped. The workpiece W is machined by a tool of the machine tool while the workpiece W is held by the indexing device 60 and the support device 70B not relatively movably. When machining at all predetermined workpiece index angles is completed, in response to a machining end signal from the control device of the machine tool, the control device 80 deactivates the clamping device of the indexing device 60 and the rotational clamping device 7, and also deactivates the axial clamping device 6. The operator operates the claw advance/retract mechanism of the coupling member 3 to retract the plurality of claws 3b, thereby releasing chucking of the workpiece W. The deactivation switch of the force generating device 5 on the operation panel of the machine tool is operated, the high-pressure fluid is supplied to the retract pressure chamber 5c1, the support shaft 2 is retracted with the countershaft 4, and the contact surface 3a3 is separated from the second end surface of the workpiece W. The operator detaches the workpiece W from the workpiece mounting jig 65 of the indexing device 60.

In the rotary indexer 50, as described above, while the axial clamping device 6 clamps the countershaft 4, the control device 80 synchronously rotates the driving motor 63 of the indexing device 60 and the dedicated driving motor M of the support device 70B. Accordingly, a correct workpiece index angle can be obtained. In addition, the workpiece W can be machined with high accuracy without being twisted and deformed during indexing and during machining at a predetermined workpiece index angle. Further, in this modification, the force generating device 5 is activated, and the play in the axial direction between the support shaft 2 and the rotary shaft 62 of the indexing device 60 is eliminated by the workpiece W. Accordingly, the workpiece W can be machined with further high accuracy without moving in the axial direction or vibrated due to the machining force from the tool.

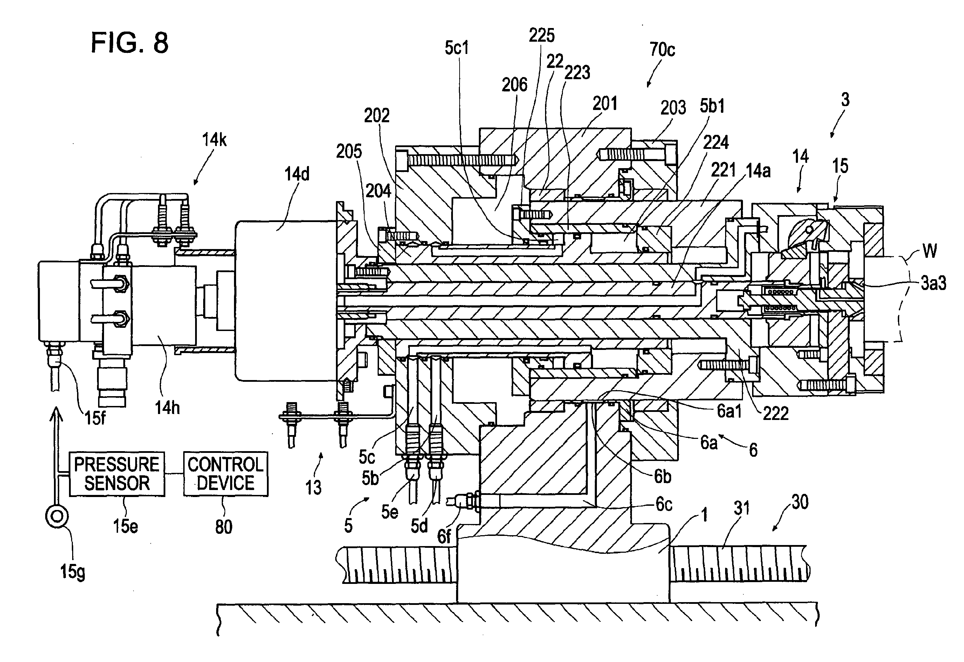

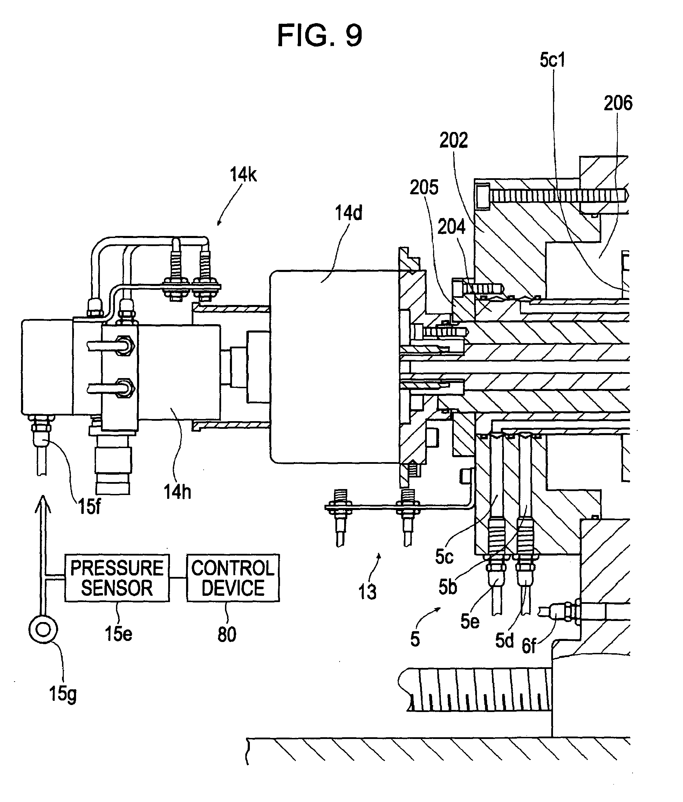

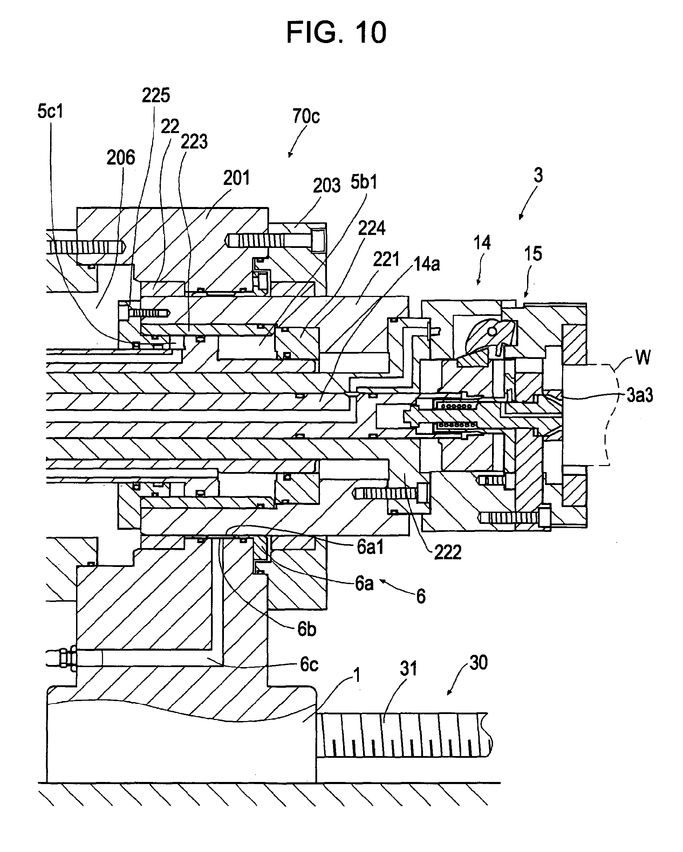

Next, a workpiece support device 70C according to still another modification of the embodiment is described with reference to Fig. 8 which is the overview, Fig. 9 which is the detailed left view of Fig. 8, and Fig. 10 which is the detailed right view of Fig. 8. The workpiece support device 70C of this modification, similarly to the support device 70, 70A, or 70B, is arranged at a position opposite to the position of an indexing device 60. The support device 70C and the indexing device 60 form a rotary indexer 50. Similarly to the support device 70A, a chucking device, which serves as a coupling member 3, includes a claw advance/retract device 14 as a so-called power chuck device, and a mount check device 15 that checks whether a contact surface 3a3 contacts a workpiece W or not. The support device 70C differs from the support device 70A in that the support device 70C in this modification does not have a countershaft 4, and a support shaft 2 slides on the inner peripheral surface of a frame 1 directly or indirectly via a sliding bearing 22 using, for example, sintered substance containing metal. In this modification, although described below, since the sintered substance containing metal as the sliding bearing 22 is press fitted to the inner peripheral surface of the frame 1, the support shaft 2 slides on the inner peripheral surface of the frame 1 via the sliding bearing 22.

The frame 1 includes first to fifth frame members 201 to 205. The first frame member 201 is mounted on a bed B of a machine tool. The second frame member 202 is fitted to the inner peripheral surface of the first frame member 201 and fixed to a not-workpiece-side end surface of the first frame member 201 by a bolt. The third frame member 203 is fitted to the inner peripheral surface of the first frame member 201 and fixed to a workpiece-side end surface of the first frame member 201 by a bolt. The fourth frame member 204 is fitted to the inner peripheral surface of the second frame member 202. The fifth frame member 205 is fixed to a not-workpiece-side end surface of the second frame member 202 by a bolt, and serving as a positioning member for relative positions of the second and fourth frame members 202 and 204 in the axial direction. The fourth frame member 204 extends from a fitting surface thereof with respect to the second frame member 202 to a workpiece-side end of the third frame member 203 in the axial direction. In the frame 1, a housing space 206 of the support shaft 2 is formed in a ring shape. The housing space 206 extends in the axial direction along the outside of the fourth frame member 204 in the radial direction and the workpiece side of the housing space 206 is open. The sintered substance containing metal, serving as the sliding bearing 22, is press fitted to the inner peripheral surfaces of the first frame member 201 and the third frame member 203.

The support shaft 2 includes first to fifth support shaft members 221 to 225. The first support shaft member 221 is fitted to the inner peripheral surface of the sliding bearing 22 and inserted into the housing space 206. The second support shaft member 222 is inserted into an axial through hole of the fourth frame member 204, a workpiece-side-end outer peripheral surface of the second support shaft member 222 being fitted to the first frame member 201, a workpiece-side-end orthogonal-to-axis step-portion surface of the second support shaft member 222 being fixed to the first frame member 201 by a bolt. The third and fourth support shaft members 223 and 224 being in contact with each other and fitted to the inner peripheral surface of the first frame member 201, the third support shaft member 223 being disposed at the not-workpiece side, the fourth support shaft member 224 being disposed at the workpiece side. The fifth support shaft member 225 has a cylindrical part fitted to the inner peripheral surface of the third support shaft member 223, and a flange part fixed to a not-workpiece-side end surface of the first support shaft member 221 by a bolt, to hold the third and fourth support shaft members 223 and 224 between the fifth support shaft member 225 and the first support shaft member 221.

An axial clamping device 6 in this modification includes a body member 6a having a flange part fixed to an orthogonal-to-axis step-portion surface of the first frame member 201 by a bolt, a thin ring portion 6a1 formed at a cylindrical part of the body member 6a, a ring-shaped clamping pressure chamber 6b formed between the outer peripheral surface of the thin ring portion 6a1 and the inner peripheral surface of the first frame member 201, and a channel 6c provided at the first frame member 201, the channel 6c being open to a not-workpiece-side end surface of the first frame member 201 and to the clamping pressure chamber 6b. The channel 6c communicates with a high-pressure fluid supply (not shown) via a connector terminal 6f provided at a not-workpiece-side end surface of the first frame member 201, and a pipe.

When the axial clamping device 6 is activated, high-pressure fluid is supplied from the high-pressure fluid supply to the clamping pressure chamber 6b via the pipe, the connector terminal 6f, and the channel 6c. The thin ring portion 6a1 functions as a pressing member provided at the frame 1. The diameter of the thin ring portion 6a1 decreases by the fluid pressure of the high-pressure fluid of the clamping pressure chamber 6b. The thin ring portion 6a1 presses the outer peripheral surface of the support shaft 2, and restricts relative movement in the axial direction and relative rotation of the frame 1 and the support shaft 2.

A force generating device 5 in this modification includes a double-acting fluid-pressure cylinder device formed of the third support shaft member 223 serving as a cylinder and the fourth frame member 204 serving as a piston. Since the piston of the fluid-pressure cylinder device is the frame 1 which is a fixed member, the cylinder slides relative to the fixed piston. The fifth support shaft member 225 fixed to the not-workpiece side of the third support shaft member 223 and the fourth support shaft member 224 fixed to the not-workpiece side of the third support shaft member 223 are slidably fitted to the outer peripheral surface of the fourth frame member 204. Assuming that the fourth frame member 204 and the fifth support shaft member 225 serve as opposite cylinder heads, an advance pressure chamber 5b1 is formed at the workpiece side and a retract pressure chamber 5c1 is formed at the not-workpiece side while a piston wall formed at the fourth frame member 204 is arranged therebetween. The advance pressure chamber 5b1 and the retract pressure chamber 5c1 respectively communicate with connector terminals 5d and 5e provided at the outer peripheral surface of the second frame member 202 via an advance channel 5b and a retract channel 5c made in the fourth frame member 204 and the second frame member 202. The advance pressure chamber 5b1 and the retract pressure chamber 5c1 are connected to a high-pressure fluid supply via a pipe, an electromagnetic on-off valve (not shown), and a regulator. Two circular grooves are formed at fitting surfaces of the second frame member 202 and the fourth frame member 204, the grooves respectively corresponding to the advance channel 5b and the retract channel 5c. Regardless of the press-fit phase, the advance channel 5b and the retract channel 5c at the second frame member 202 are connected to those at the fourth frame member 204.

The chucking device serving as the coupling member 3 in this modification is provided at a workpiece-side end portion of the support shaft 2 in a similar manner to the support device 70A. The chucking device includes a claw advance/retract device 14 and a mount check device 15 in a similar manner to the support device 70A. The claw advance/retract device 14 in this modification includes a drawbar displacement sensor 14k in a similar manner to the support device 70A. In this modification, an axial position sensor 13 of the support shaft 2 is provided at the not-workpiece side of the support device 70C in a similar manner to the support device 70 or 70A.

The machining procedure of machining the workpiece W using the rotary indexer 50 is described below. The operator fixes and couples the first end of the workpiece W to a workpiece mounting jig 65 of a rotary shaft 62 of the indexing device 60, and then operates an activation switch of the force generating device 5, the switch provided on an operation panel of the machine tool. The play in the axial direction between the rotary shaft 62 of the indexing device 60 and the support shaft 2 of the support device 70C is eliminated by the workpiece W. Also, the play in the axial direction between a ball screw nut provided at the frame 1 and a ball screw shaft 31 is eliminated by a reaction force added from the workpiece W via the frame 1.

The operator operates an activation switch of the claw advance/retract device 14, the switch provided on the operation panel of the machine tool. The second end of the workpiece W is held by the chucking device and coupled to the support shaft 2.

The operator operates a machining start switch provided on the operation panel of the machine tool. The control device of the machine tool outputs a predetermined index angle signal to the control device 80 in response to a machining start signal from the machining start switch. The control device 80 stops the driving motor 63 at a predetermined rotation index angle in accordance with an index angle signal.

The control device 80 activates a clamping device (not shown) of the indexing device 60 after the driving motor 63 is stopped, so as to clamp the rotary shaft 62. Also, the control device 80 activates the axial clamping device 6. The workpiece W is integrally fixed to the frame 1 via the coupling member 3 and the support shaft 2.

The workpiece W is machined by a tool of the machine tool while the first and second ends of the workpiece W are supported by the indexing device 60 and the support device 70C not relatively movably. When the machining of the workpiece W at the predetermined workpiece index angle is completed, the control device of the machine tool outputs a next predetermined index angle signal to the control device 80 for machining at a next predetermined workpiece index angle. The control device 80 deactivates the clamping device of the indexing device 60 and the axial clamping device 6 in accordance with the index angle signal. Then, the control device 80 rotates the driving motor 63 and stops the driving motor 63 at a next predetermined index angle. The control device 80 activates the clamping device of the indexing device 60 and the axial clamping device 6 after the driving motor 63 is stopped, so that the workpiece W is machined in a similar condition to that at the previous predetermined workpiece index angle.

When machining at all predetermined workpiece index angles is completed, in response to a machining end signal from the control device of the machine tool, the control device 80 deactivates the clamping device of the indexing device 60 and the axial clamping device 6. The operator operates a deactivation switch of the claw advance/retract device 14, the switch provided on the operation panel of the machine tool, so as to release the workpiece W. Then, the operator operates a deactivation switch of the force generating device 5, the switch provided on the operation panel of the machine tool, so as to retract the support shaft 2. After the retraction is completed, the supply of the high-pressure fluid from the high-pressure supply is stopped. The operator detaches the workpiece W from the workpiece mounting jig 65 of the indexing device 60, and thusly the machined workpiece W is detached from the rotary indexer 50.

In this modification, the force generating device 5 is activated from when the operator operates the activation switch of the force generating device 5 to when the operator operates the deactivation switch on the operation panel of the machine tool, and hence, the force generating device 5 is continuously activated during machining of the workpiece W. Alternatively, the force generating device 5 may be deactivated automatically or manually by operating the deactivation switch by the operator during machining at a predetermined workpiece index angle after the axial clamping device 6 is activated. If an impulsive machining force is applied to the workpiece W in the axial direction and hence the support shaft 2 clamped by the axial clamping device 6 may be retracted, the force generating device 5 is preferably continuously activated during machining of the workpiece W in a similar manner to this modification.

The rotary indexer 50 can carry out, in addition to such indexing machining in which the rotation of the workpiece W is stopped and held at a predetermined index angle, indexing machining during rotating the workpiece W, and turning machining of the workpiece W, with or without indexing machining. To carry out indexing of the workpiece W during rotating the workpiece W, or to carry out turning of the workpiece W, the force generating device 5 is activated, but the axial clamping device 6 is not activated and is brought into the deactivated state. Alternatively, similarly to the rotary indexer 50 using the support device 70, 70A, or 70B, machining may be carried out while the workpiece W is pressed by the force generating device 5, or while the workpiece W is drawn by the force generating device 5.

The present invention is not limited to any of the above-described embodiment and modifications, and may be modified within the scope of the present invention.

## Claims

1. A workpiece support device (70) configured to support a second end of a workpiece (W) while a first end of the workpiece (W) is coupled to a rotary shaft (62) of a rotary drive (60), the support device (70) comprising:
a coupling member (3) configured to couple the second end of the workpiece (W);
a support shaft (2), the coupling member (3) provided at a first end of the support shaft (2);
a frame (1) configured to support the support shaft (2) movably in an axial direction and rotatably;
a force generating device (5) configured to apply a force in the axial direction to the support shaft (2); and
an axial clamping device (6) including a single pressing member (6a1) extending along the entire periphery of the support shaft (2) or a plurality of pressing members (6a1) equally arranged in a circumferential direction of the support shaft (2), the pressing member (6a1) generating a force in a radial direction while the force generating device (5) is activated, the axial clamping device (6) fixing the support shaft (2) to the frame (1) in the axial direction by the force.

2. The workpiece support device (70) according to claim 1, further comprising:
a countershaft (4) provided at the outside in the radial direction of the support shaft (2) coaxially with the support shaft (2),
wherein the frame (1) supports the support shaft (2) movably in the axial direction and rotatably in association with the countershaft (4),
wherein one of pairs including a pair of the support shaft (2) and the countershaft (4) and a pair of the countershaft (4) and the frame (1) is configured to be relatively rotatable but not relatively movable in the axial direction via a rolling bearing (9), and
wherein the pressing member (6a1) of the axial clamping device (6) is supported by an outer member in the radial direction of the other one of the pairs, the axial clamping device (6) applying a pressing force as a force in the radial direction to the outer peripheral surface of an inner member in the radial direction of the other one of the pairs.

3. The workpiece support device (70) according to claim 2, further comprising a rotational clamping device (7) configured to restrict relative rotation of the one of the pairs.

4. A rotary indexer (50) comprising:
the workpiece support device (70) according to claim 3;
an indexing device (60) serving as the rotary drive provided at a position opposite to the position of the support device (70) and including the rotary shaft (62) to which the first end of the workpiece (W) is coupled; and
a control device,
wherein the control device deactivates the rotational clamping device (7) when the indexing device (60) is rotated, and activates the rotational clamping device (7) when the rotation of the indexing device (60) is stopped.

5. A rotary indexer (50) comprising:
the workpiece support device (70) according to claim 1;
an indexing device (60) serving as the rotary drive provided at a position opposite to the position of the support device (70) and including the rotary shaft (62) to which the first end of the workpiece (W) is coupled; and
a control device (80),
wherein the pressing member (6a1) of the axial clamping device (6) is supported by the frame (1) and applies a pressing force as the force in the radial direction to the outer peripheral surface of the support shaft (2), and the support device (70) fixes the support shaft (2) to the frame (1) not movably in the axial direction and not rotatably relative to the frame (1) by the pressing force, and
wherein the control device (80) deactivates the axial clamping device (6) and activates the force generating device (5) when the indexing device (60) is rotated, and activates the axial clamping device (6) while the force generating device (5) is activated when the rotation of the indexing device (60) is stopped.

6. The rotary indexer (50) according to claim 4 or 5, further comprising a drive (8) configured to cause the support shaft (2) to be rotated in the same manner as the indexing device (60).

7. The rotary indexer (50) according to claim 6,
wherein the drive (8) includes a dedicated driving motor (M) which is different from a driving motor (63) of the indexing device (60), and
wherein the drive (8) includes a control device (80) configured to drive the dedicated driving motor (M) synchronously with the driving motor (63) of the indexing device (60).
